# EUROPEAN PATENT APPLICATION

(11) **EP 3 893 215 A1**
(43) Date of publication of application: **13.10.2021**
(21) Application number: 19892729.5
(22) Date of filing: 26.11.2019
(51) Int. Cl.: G08B 25/04, G06F 3/01, G08B 21/02, B25J 5/00

(54) **INFORMATION PROCESSING DEVICE, INFORMATION PROCESSING METHOD, AND PROGRAM**

(30) Priority: 07.12.2018 JP 2018229524
(71) Applicant: Sony Group Corporation, Tokyo 108-0075 (JP)
(72) Inventor: NOMA, Hideki, Tokyo 108-0075 (JP); KISHIKAWA, Masashi, Tokyo 108-0075 (JP); MORITA, Takuma, Tokyo 108-0075 (JP); YUASA, Naoki, Tokyo 108-0075 (JP); KATAYAMA, Takeshi, Tokyo 108-0075 (JP); NAGAE, Mika, Tokyo 108-0075 (JP)
(74) Representative: MFG Patentanwälte Meyer-Wildhagen Meggle-Freund Gerhard PartG mbB
(86) International application number: PCT/JP2019/046117
(87) International publication number: WO 2020/116233

(57) **Abstract**

An information processing device includes a control unit that controls the operations of an autonomous mobile object. Based on the normal condition of a target person as estimated from a learning result regarding the everyday behavior and the everyday condition of the target person, and based on the recognized behavior and the recognized condition of the target person; the control unit controls the provision of information regarding the everyday life of the target person. Moreover, an information processing method includes controlling, by a processor, the operations of an autonomous mobile object. Based on the normal condition of a target person as estimated from the everyday behavior and the everyday condition of the target person, and based on the recognized behavior and the recognized condition of the target person; the controlling further includes controlling the provision of information regarding the everyday life of the target person.

## Description

### Field

The application concerned is related to an information processing device, an information processing method, and a program.

### Background

In recent years, robots equipped with various recognition functions have been developed. Moreover, a technology has been proposed in which such a robot is used in monitoring the target person. For example, in Patent Literature 1 is disclosed a robot that is equipped with a monitoring function for monitoring a person in need of nursing care, such as an elderly person or a child.

### Citation List

### Patent Literature

Patent Literature 1: International Laid-open Pamphlet No. 99/67067

### Summary

### Technical Problem

For example, regarding the robot disclosed in Patent Literature 1, when the target person does not move for a predetermined period of time or more, or when the target person does not respond to an output sound for a predetermined period or more; the robot can notify the guardian using the telephone function. However, depending on the target person, he or she may sense a resistance toward being monitored by such a robot.

### Solution to Problem

According to the present disclosure, an information processing device includes a control unit that controls operations of an autonomous mobile object, wherein based on normal condition of a target person as estimated from a learning result regarding everyday behavior and everyday condition of the target person, and based on recognized behavior and recognized condition of the target person, the control unit controls provision of information regarding everyday life of the target person.

Moreover, according to the present disclosure, an information processing method includes controlling, by a processor, operations of an autonomous mobile object, wherein the controlling further includes based on normal condition of a target person as estimated from a learning result regarding everyday behavior and everyday condition of the target person, and based on recognized behavior and recognized condition of the target person, controlling provision of information regarding everyday life of the target person.

Moreover, according to the present disclosure, a program that makes a computer function as an information processing device includes a control unit that controls operations of an autonomous mobile object, wherein based on normal condition of a target person as estimated from a learning result regarding everyday behavior and everyday condition of the target person, and based on recognized behavior and recognized condition of the target person, the control unit controls provision of information regarding everyday life of the target person.

### Brief Description of Drawings

FIG. 1 is a diagram illustrating an exemplary hardware configuration of an autonomous mobile object according to an embodiment of the application concerned.
FIG. 2 is an exemplary configuration of actuators installed in the autonomous mobile object according to the embodiment of the application concerned.
FIG. 3 is a diagram for explaining about the operations of the actuators installed in the autonomous mobile object according to the embodiment of the application concerned.
FIG. 4 is a diagram for explaining about the operations of the actuators installed in the autonomous mobile object according to the embodiment of the application concerned.
FIG. 5 is a diagram for explaining about the functions of displays that are installed in the autonomous mobile object according to the embodiment of the application concerned.
FIG. 6 is a diagram illustrating exemplary actions of the autonomous mobile object according to the embodiment of the application concerned.
FIG. 7 is a diagram for explaining the overview of the task of watching the target person using the autonomous mobile object according to the embodiment.
FIG. 8 is a block diagram illustrating an exemplary configuration of an information processing system according to the embodiment.
FIG. 9 is a diagram illustrating an exemplary functional configuration of the autonomous mobile object according to the embodiment of the application concerned.
FIG. 10 is a diagram illustrating an exemplary functional configuration of an information processing server according to the embodiment of the application concerned.
FIG. 11 is a diagram illustrating an example of a user interface to be used in performing the settings for the execution of a patrol according to the embodiment.
FIG. 12 is a diagram illustrating an example of a user interface to be used in setting the user who represents the target person for watching according to the embodiment, and setting a patrol in a second mode according to the embodiment.
FIG. 13 is a diagram illustrating an example of a user interface to be used in setting the target person for watching according to the embodiment.
FIG. 14 is a diagram for explaining about setting the route of a patrol according to the embodiment.
FIG. 15 is a diagram for explaining about the behavior of the autonomous mobile object during a patrol in the second mode according to the embodiment.
FIG. 16 is a diagram illustrating an example of a simplified watch report according to the embodiment.
FIG. 17 is a diagram illustrating an example of a detailed watch report according to the embodiment.
FIG. 18 is a diagram illustrating a specific example of the watching task performed by the autonomous mobile object according to the embodiment.
FIG. 19 is a diagram illustrating a specific example of the watching task performed by the autonomous mobile object according to the embodiment.
FIG. 20 is a diagram illustrating a specific example of the watching task performed by the autonomous mobile object according to the embodiment.
FIG. 21 is a diagram illustrating a specific example of the watching task performed by the autonomous mobile object according to the embodiment.
FIG. 22 is a diagram illustrating a specific example of the watching task performed by the autonomous mobile object according to the embodiment.
FIG. 23 is a diagram illustrating a specific example of the watching task performed by the autonomous mobile object according to the embodiment.
FIG. 24 is a diagram for explaining the patrolling performed in a third mode according to the embodiment.
FIG. 25 is a diagram illustrating an exemplary display performed during a patrol in the third mode according to the embodiment.
FIG. 26 is illustrated an exemplary report in the case in which the target person according to the embodiment is a child.
FIG. 27 is a block diagram of an exemplary hardware configuration example according to the embodiment of the application concerned.

### Description of Embodiments

A preferred embodiment of the application concerned is described below in detail with reference to the accompanying drawing. In the present written description and the drawings, the constituent elements having practically identical functional configuration are referred to by the same reference numerals, and the explanation is not given repeatedly.

The explanation is given in the following sequence.
1. Embodiment
   1.1. Overview of autonomous mobile object 10
   1.2. Exemplary hardware configuration of autonomous mobile object 10
   1.3. Functional overview
   1.4. Exemplary system configuration
   1.5. Exemplary functional configuration of autonomous mobile object 10
   1.6. Exemplary functional configuration of information processing server 20
   1.7. Details of watching task
2. Exemplary hardware configuration
3. Summary

### <1. Embodiment>

### <<1.1. Overview of autonomous mobile object 10>>

Firstly, the explanation is given about the overview of an autonomous mobile object 10 according to the embodiment of the application concerned. The autonomous mobile object 10 is an information processing device that performs situation estimation based on the collected sensor information, and autonomously selects and performs various operations depending on the situation. Unlike a robot that performs operations only by following user commands, one of the features of the autonomous mobile object 10 is to autonomously perform operations that are presumed to be the most suitable in each situation.

The autonomous mobile object 10 according to the embodiment of the application concerned can perform, for example, user recognition or object recognition based on photographed images, and can take various autonomous actions according to the recognized user or the recognized object. Moreover, for example, the autonomous mobile object 10 according to the embodiment can perform speech recognition based on the utterances of the user, and can take actions according to the instructions from the user.

In this way, the autonomous mobile object 10 according to the embodiment of the application concerned comprehensively evaluates the wants and the feelings of an animal including a person, as well as comprehensively evaluates the surrounding environment; and decides on and performs autonomous operations. In that regard, the autonomous mobile object 10 is clearly different than a passive device that performs operations based on instructions.

The autonomous mobile object 10 according to the embodiment of the application concerned can be an autonomous mobile robot that autonomously moves in a space and performs various operations. For example, the autonomous mobile object 10 can be an autonomous mobile robot having the shape and the movement capability modeled on a person or an animal, such as a dog. Alternatively, for example, the autonomous mobile object 10 can be a vehicle or some other device having the ability to communicate with the user. Thus, regarding the autonomous mobile object 10 according to the embodiment; the shape, the capability, and the requirements can be appropriately designed according to the objective and the role of the autonomous mobile object 10.

### <<1.2. Exemplary hardware configuration of autonomous mobile object 10>>

Given below is the explanation of an exemplary hardware configuration of the autonomous mobile object 10 according to the embodiment of the application concerned. The following explanation is given for an example in which the autonomous mobile object 10 is a quadrupedal robot modeled on a dog.

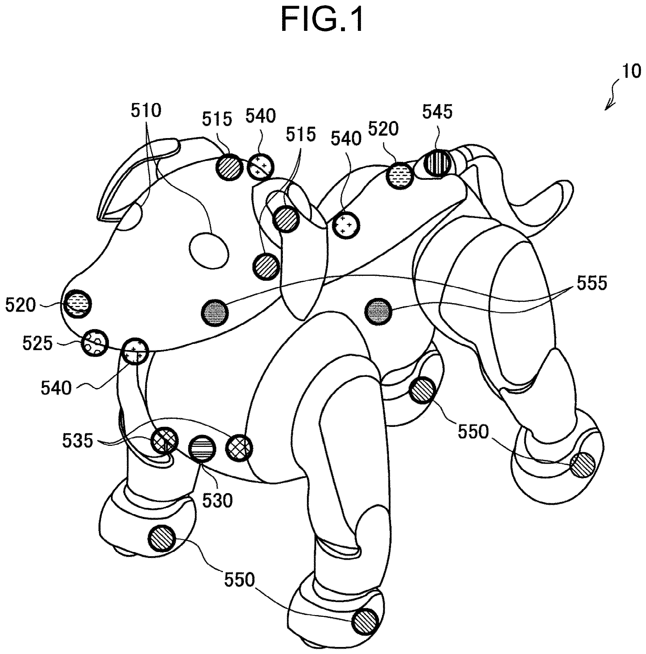

FIG. 1 is a diagram illustrating an exemplary hardware configuration of the autonomous mobile object 10 according to the embodiment of the application concerned. As illustrated in FIG. 1, the autonomous mobile object 10 is a dog-shaped quadrupedal robot having a head region, a torso region, four leg regions, and a tail region. Moreover, the autonomous mobile object 10 includes two displays 510 in the head region.

Furthermore, the autonomous mobile object 10 includes various sensors. For example, the autonomous mobile object 10 includes microphones 515, cameras 520, a ToF (Time of Flight) sensor 525, a human-presence sensor 530, ranging sensors 535, touch sensors 540, an illumination sensor 545, sole buttons 550, and inertia sensors 555.

### (Microphones 515)

The microphones 515 have the function of collecting the surrounding sounds. Examples of the sounds include the utterances of the user and the surrounding environmental sound. The autonomous mobile object 10 can include, for example, four microphones in the head region. As a result of having a plurality of microphones 515, the sounds generated in the surrounding area can be collected with high sensitivity, and the localization of the source of the sound can be performed.

### (Cameras 520)

The cameras 520 have the function of photographing the user and the surrounding environment. For example, the autonomous mobile object 10 can include two wide-angle cameras, one at the tip of the nose and one in the loin region. In that case, the wide-angle camera installed at the tip of the nose photographs images corresponding to the anterior field of view of the autonomous mobile object (i.e., corresponding to the eyesight of a dog); and the wide-angle camera installed in the loin region photographs images of the surrounding area centered on the upward direction. For example, based on the images photographed by the wide-angle camera installed in the loin region, the autonomous mobile object 10 can extract the feature points of the ceiling and implement SLAM (Simultaneous Localization and Mapping).

### (ToF sensor 525)

The ToF sensor 525 has the function of detecting the distance to an object present in the anterior direction of the head region. The ToF sensor 525 is installed at the tip of the nose in the head region. As a result of using the ToF sensor 525, the distances to various objects can be detected with high accuracy, and the operations can be performed according to the relative positions with respect to the target objects, including the user, and obstacles.

### (Human-presence sensor 530)

The human-presence sensor 530 has the function of detecting the whereabouts of the user or the pets of the user. The human-presence sensor 530 is installed in, for example, the chest region. As a result of using the human-presence sensor 530, any animal body present in the anterior direction can be detected and various operations with respect to that animal body can be performed, such as the operations according to the feelings including interest, fear, and astonishment can be performed.

### (Ranging sensors 535)

The ranging sensors 535 have the function of obtaining the condition of the floor in the anterior direction of the autonomous mobile object 10. For example, the ranging sensors 535 are installed in the chest region. As a result of using the ranging sensors 535, the distance to any object present on the floor in the anterior direction of the autonomous mobile object 10 can be detected with high accuracy, and the operations can be performed according to the relative position with respect to that object.

### (Touch sensors 540)

The touch sensors 540 have the function of detecting a touch by the user. For example, the touch sensors 540 are installed at the body parts that are highly likely to be touched by the user, such as the vertex of the head, the underside of the jaw, and the back of the autonomous mobile object 10. The touch sensors 540 can be, for example, touch sensors of the capacitive type or the pressure-sensitive type. As a result of using the touch sensors 540, touching actions such as touching, stroking, tapping, and pressing performed by the user can be detected, and the operations can be performed according to the touching actions.

### (Illumination sensor 545)

The illumination sensor 545 detects the illumination of the space in which the autonomous mobile object 10 is positioned. For example, the illumination sensor 545 can be installed at the base of the tail region on the backside of the head region. As a result of using the illumination sensor 545, the surrounding brightness can be detected, and the operations can be performed according to that brightness.

### (Sole buttons 550)

The sole buttons 550 have the function of detecting whether or not the undersurface of the leg portions of the autonomous mobile object 10 is touching the floor. For that reason, the sole buttons 550 are installed in the portions corresponding to the paw pads of the four legs. As a result of using the sole buttons 550, the physical contact or the non-contact between the autonomous mobile object 10 and the floor surface can be detected; and, for example, it can be understood that the autonomous mobile object 10 has been lifted up by the user.

### (Inertia sensors 555)

The inertia sensors 555 are 6-axis sensors for detecting the physical quantities such as the velocity, the acceleration, and the rotation of the head region or the torso region. That is, the inertia sensors 555 detect the acceleration and the angular velocity of the X-axis, the Y-axis, and the Z-axis. The inertia sensors 555 are installed in the head region and the torso region. As a result of using the inertia sensors 555, the movements of the head region and the torso region of the autonomous mobile object 10 can be detected with high accuracy, and operation control can be performed according to the situation.

Till now, the explanation was given about an example of the sensors installed in the autonomous mobile object 10 according to the embodiment of the application concerned. Meanwhile, the configuration explained with reference to FIG. 1 is only exemplary, and the configuration of the sensors includible in the autonomous mobile object 10 is not limited to this example. In addition to the configuration explained above, the autonomous mobile object 10 can further include a temperature sensor, a geomagnetic sensor, and various communication devices including a GNSS (Global Navigation Satellite System) signal receiver. Thus, the configuration of the sensors installed in the autonomous mobile object 10 can be flexibly modified according to the specifications and the operations.

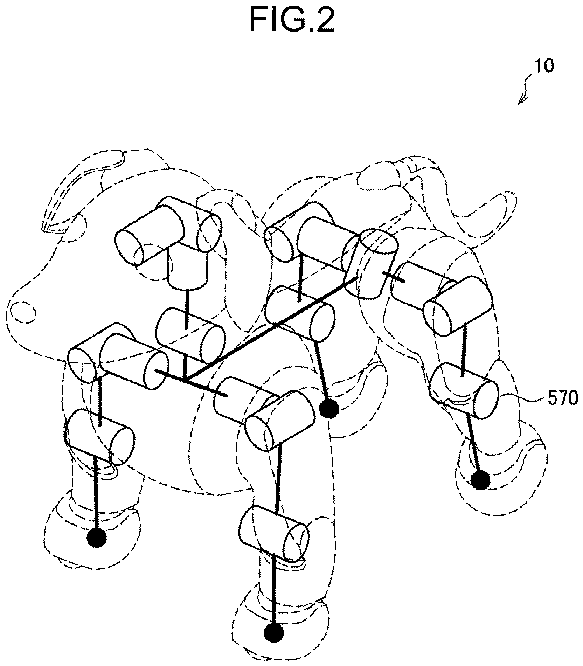

Given below is the explanation of an exemplary configuration of the joint regions of the autonomous mobile object 10 according to the embodiment. FIG. 2 is an exemplary configuration of actuators 570 installed in the autonomous mobile object 10 according to the embodiment of the application concerned. The autonomous mobile object 10 according to the embodiment of the application concerned has a total of 22 rotational degrees of freedom that, in addition to including rotating parts illustrated in FIG. 2, include two rotational degrees of freedom in the ear regions, two rotational degrees of freedom in the tail region, and one rotational degree of freedom on the mouth.

For example, as a result of having three rotational degrees of freedom in the head region, the autonomous mobile object 10 can perform nodding as well as tilting the head to the sides. Moreover, as a result of having the actuator 570 installed in the loin region, the autonomous mobile object 10 can reproduce the swinging action of the loin. That enables achieving natural and flexible actions that are more similar to a real-life dog.

Meanwhile, in the autonomous mobile object 10 according to the embodiment of the application concerned, for example, the 22 rotational degrees of freedom can be implemented using a combination of one-axis actuators and two-axis actuators. For example, one-axis actuators can be used in the elbow portions and the knee portions of the leg regions, and two-axis actuators can be used in the base of the shoulders and the thighs.

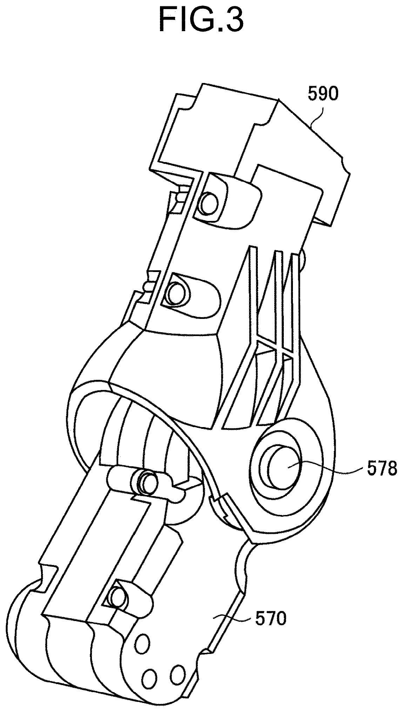

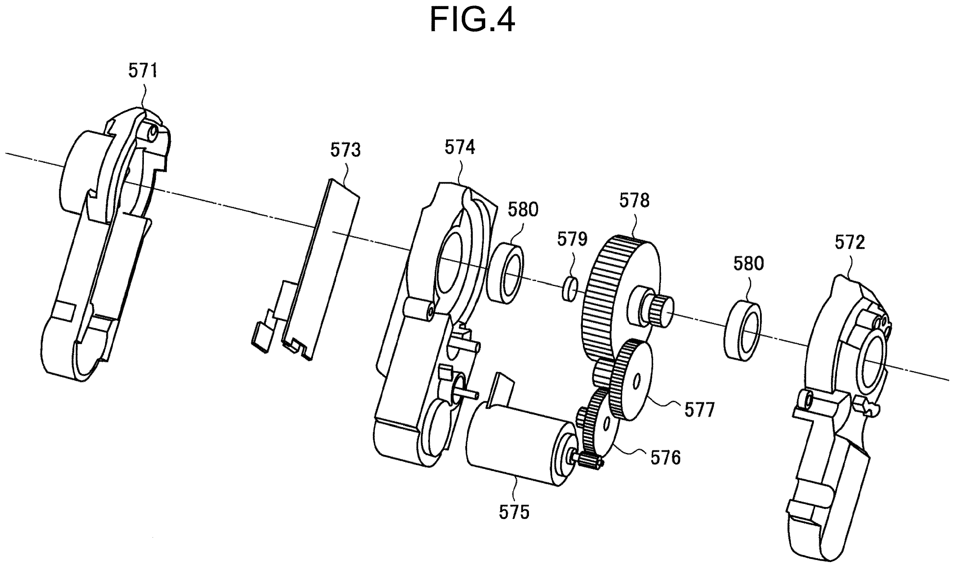

FIGS. 3 and 4 are diagrams for explaining about the operations of the actuators 570 installed in the autonomous mobile object 10 according to the embodiment of the application concerned. With reference to FIG. 3, in each actuator 570, as a result of rotating an output gear using a motor 575, a movable arm 590 can be driven at an arbitrary rotational position and an arbitrary rotating speed.

With reference to FIG. 4, the actuator 570 according to the embodiment of the application concerned includes a rear cover 571, a gearbox cover 572, a control board 573, a gearbox base 574, the motor 575, a first gear 576, a second gear 577, an output gear 578, a detection magnet 579, and two bearings 580.

The actuators 570 according to the embodiment of the application concerned can be, for example, magnetic svGMR (spin-valve Giant Magnetoresistive). The control board 573 rotates the motor 575 under the control of a main processor, so that the power can be transmitted to the output gear 578 via the first gear 576 and the second gear 577, and the movable arm 590 can be driven.

Moreover, a position sensor installed in the control board 573 detects the angle of rotation of the detection magnet 579 that rotates in synchronization with the output gear 578; so that the angle of rotation of the movable arm 590, that is, the rotational position of the movable arm 590 can be detected with high accuracy.

Meanwhile, magnetic svGMR has excellent durability on account of being non-contactless in nature; and, as a result of being used in the GMR saturation area, is less affected by signal fluctuation attributed to the variation in the distance to the detection magnet 579 or the position sensor.

Till now, the explanation was given about an exemplary configuration of the actuators 570 installed in the autonomous mobile object 10 according to the embodiment of the application concerned. With such a configuration, the bending action of the joint regions of the autonomous mobile object 10 can be controlled with high accuracy, and the rotational positions of the joint regions can be accurately detected.

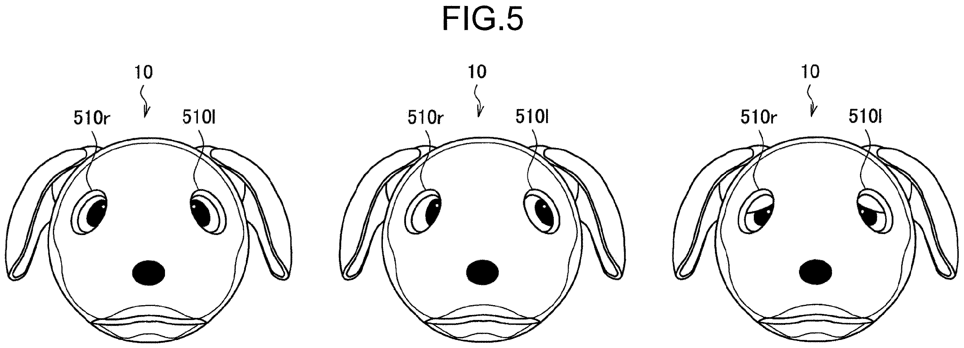

Explained below with reference to FIG. 5 are the functions of the displays 510 that are installed in the autonomous mobile object 10 according to the embodiment of the application concerned. FIG. 5 is a diagram for explaining about the functions of the displays 510 that are installed in the autonomous mobile object 10 according to the embodiment of the application concerned.

### (Displays 510)

The displays 510 have the function of visually expressing the eye movement and the feelings of the autonomous mobile object 10. As illustrated in FIG. 5, the displays 510 can express the movements of the eyeballs, the pupils, and the eyelids according to feelings and actions. Moreover, it is ensured that images of characters and symbols not related to the ocular movements are not displayed in the displays 510, so as to create natural actions that are similar to a real-life animal such as a dog.

As illustrated in FIG. 5, the autonomous mobile object 10 includes two displays, namely, a display 510r corresponding to the right eye and a display 5101 corresponding to the left eye. The displays 510r and 5101 are implemented using, for example, two independent OLEDs (Organic Light Emitting Diodes). As a result of using OLEDs, the curved surface of the eyeballs can be reproduced, and hence a more natural exterior look can be achieved as compared to the case in which the pair of eyeballs is expressed using a single flat display or the case in which the two eyeballs are expressed using two independent flat displays.

As explained above, as a result of using the displays 510r and 5101, the glances and the feelings of the autonomous mobile object 10 as illustrated in FIG. 5 can be expressed with high accuracy and in a flexible manner. Moreover, from the actions of the eyeballs displayed in the displays 510, the user becomes able to intuitively understand the state of the autonomous mobile object 10.

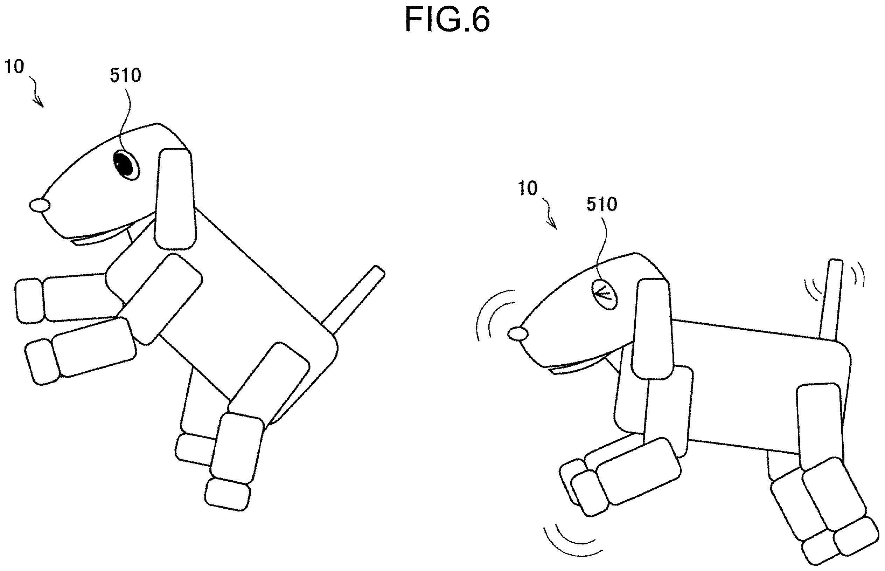

Till now, the explanation was given about an exemplary hardware configuration of the autonomous mobile object 10 according to the embodiment of the application concerned. With such a hardware configuration, as illustrated in FIG. 6, the actions of the joint regions and the eyeballs of the autonomous mobile object 10 are controllable with high accuracy and flexibility, and hence actions and emotional expressions close to a real-life living object can be achieved. FIG. 6 is a diagram illustrating exemplary actions of the autonomous mobile object 10 according to the embodiment of the application concerned. With reference to FIG. 6, the explanation is given with the focus on the actions of the joint regions and the eyeballs of the autonomous mobile object 10. For that reason, the outside structure of the autonomous mobile object 10 is illustrated in a simplified form. In an identical manner, in the subsequent explanation too, the outside structure of the autonomous mobile object 10 is sometimes illustrated in a simplified form. However, the hardware configuration and the exterior look of the autonomous mobile object 10 according to the embodiment of the application concerned is not limited to the examples illustrated in the drawings, and can be designed as deemed appropriate.

### <<1.3. Functional overview>>

Given below is the explanation of the overview of the functions of the information processing device according to the embodiment of the application concerned. As explained earlier, in recent years, a technology has been developed by which the target person is monitored using a robot and, if any abnormality is detected, the guardian is notified about the same.

For example, the robot disclosed in Patent Literature 1 refers to the obtained images, voices, and other sensor information to recognize the actions of a person in need of nursing care, such as an elderly person or a child; and, if the target person does not make any movements for a predetermined period of time or more, outputs a message or a sound. Moreover, in case the target person does not respond to the output message or the output sound, then the robot can notify abnormality by making a call to the family or a hospital according to the preregistered information.

As a result of using such a robot, even when it is difficult to manually perform continued monitoring or nursing care for long periods of time, the changes in the state of the target person can be recognized with high accuracy and any abnormality can be promptly dealt with.

However, depending on the target person who is in need of nursing care or monitoring, it is possible to think of a case in which the target person senses a resistance toward being constantly monitored by such a robot, that is, toward the fact that images and voices are obtained. For that reason, the monitoring of the target person using the robot disclosed in Patent Literature 1 is potentially applicable to limited situations.

On the other hand, with the aim of alleviating the resistance in regard to such monitoring, a technology has been developed by which the everyday actions of the target person are detected using the devices involved in those actions and the detection result is informed to the family of the target person that is staying at a distant place. Examples of such devices include kitchen utensils and home electrical appliances. According to that technology, for example, whether or not the target person did the cooking can be understood from a distant place, and an action can be taken according to the detection result.

However, in the technology explained above, it is difficult to minutely detect any information except for the use or the non-use of devices, and it is also not possible to understand the condition of the target person at a place where such devices are not installed.

The technical concept according to the embodiment of the application concerned is ideated focusing on the abovementioned issue, and enables performing the watching task in more comfortable manner that is integrated into the everyday life of the target person.

In that regard, the information processing device according to the embodiment of the application concerned includes an operation control unit 140 that controls the operations of the autonomous mobile object 10, and that is characterized by the function of controlling the provision of information regarding the everyday life of the target person based on the normal condition of the target person as estimated from the learning result regarding the everyday behavior and the everyday condition of the target person and based on the recognized behavior and the recognized condition of the target person. Meanwhile, the information processing device according to the embodiment of the application concerned can be implemented as, for example, the autonomous mobile object 10.

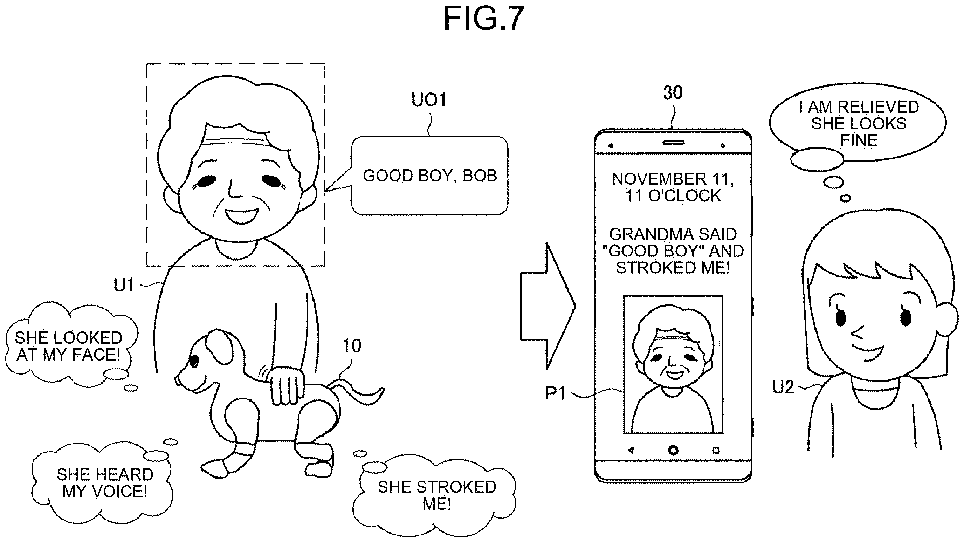

FIG. 7 is a diagram for explaining the overview of the task of watching the target person using the autonomous mobile object 10 according to the embodiment. On the left side in FIG. 1, a user U1 representing the target person for watching and the autonomous mobile object 10 possessed by the user U1 are illustrated. As illustrated in FIG. 1, the autonomous mobile object 10 according to the embodiment can be a dog-shaped quadrupedal robot. The autonomous mobile object 10 can be a companion robot that has a high level of entertainment properties, recognizes the user U1 and the state of the surrounding environment using various recognition technologies, and performs actions and emotional expressions close to an actual living being.

The autonomous mobile object 10 according to the embodiment is capable of performing operations such as running over to the user U1 based on recognizing his or her face and performing an action in response to an utterance of the user U1 or in response to coming in physical contact (being touched, stroked, or patted) by the user U1.

Moreover, the autonomous mobile object 10 according to the embodiment is capable of learning the everyday behavior or the everyday condition of the user U1, and estimate his or her normal condition. For example, based on the fact that the face of the user U1 is often recognized in the living room during the daytime, the autonomous mobile object 10 can estimate that being in the living room during the daytime is the normal condition of the user U1. Alternatively, for example, the autonomous mobile object 10 can learn the frequency of utterances or physical contacts made on an everyday basis by the user U1 with respect to the autonomous mobile object 10, and can treat that frequency as the normal condition.

In that case, based on the normal condition estimated as explained above and based on the behavior and the condition of the user recognized in real time, the autonomous mobile object 10 according to the embodiment evaluates the everyday condition of the user U1 in regard to health and safety, and performs control to provide the information regarding that condition to the report destination set in advance.

For example, in the example illustrated in FIG. 1, the autonomous mobile object 10 can perform control to ensure that, based on the whereabouts of the user U1, based on an utterance U01 of the user U1, and based on the recognition of a physical contact by the user U1; information indicating that the user U1 is in the normal condition is provided to a user U2. Herein, for example, the user U2 can be someone who is a relative of the user U1 but who is living at a distant place.

In that case, for example, the autonomous mobile object 10 can perform control in such a way that the fact of recognizing the utterance UO1, the fact of being stroked by the user U1, and a photographed image P1 of the user U1 are displayed in an information processing terminal 30 such as a smartphone that is in possession of the user U2. Such provision of information can be done via an information processing server 20 (described later).

In this way, the autonomous mobile object 10 according to the embodiment can get integrated into the everyday life of the target person and can perform the watching task while behaving in a more natural way. As a result, for example, the resistance of being monitored by a device as sensed by the target person can be dispelled, and the watching task can be implemented while balancing between entertainment properties and security.

### <<1.4. Exemplary system configuration>>

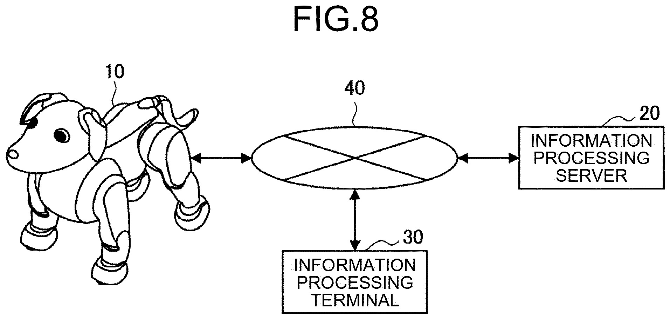

Given below is the explanation of an exemplary configuration of an information processing system according to the embodiment of the application concerned. FIG. 8 is a block diagram illustrating an exemplary configuration of the information processing system according to the embodiment. With reference to FIG. 8, the information processing system according to the embodiment includes the autonomous mobile object 10, the information processing server 20, and the information processing terminal 30. Those devices are connected to each other via a network 40.

### (Autonomous mobile object 10)

The autonomous mobile object 10 according to the embodiment is an information processing device that performs situation estimation based on the collected sensor information, and autonomously selects and performs various operations depending on the situation. Moreover, the autonomous mobile object 10 according to the embodiment is characterized by the function of performing the task of watching the target person while performing autonomous operations, and controlling the provision of information to the report destination.

### (Information processing server 20)

The information processing server 20 according to the embodiment controls a user interface that is meant for providing information about the condition of the target person, as recognized by the autonomous mobile object 10, to the report destination.

### (Information processing terminal 30)

The information processing terminal 30 according to the embodiment is a device used to view watching task information by the user who represents the report destination as far as watching of the target person is concerned. Examples of the information processing terminal 30 according to the embodiment include a PC (Personal Computer), a cellular phone, a smartphone, and a tablet.

### (Network 40)

The network 40 has the function of connecting the devices mentioned above. The network 40 can include a public line network such as the Internet, a telephone line network, or a satellite communication network; various types of LANs (Local Area Networks) such as Ethernet (registered trademark); and a WAN (Wide Area Network). Alternatively, the network 40 can include a dedicated line network such as an IP-VPN (Internet Protocol-Virtual Private Network). Still alternatively, the network 40 can include a wireless communication network such as Wi-Fi (registered trademark) or Bluetooth (registered trademark).

Till now, the explanation was given about an exemplary configuration of the information processing system according to the embodiment of the application concerned. However, the configuration explained above with reference to FIG. 8 is only exemplary, and the configuration of the information processing system according to the embodiment of the application concerned is not limited to that example. Alternatively, for example, the autonomous mobile object 10 according to the embodiment can directly control the provision of watching task information from the information processing terminal 30, without involving the information processing server 20. Thus, the configuration of the information processing system according to the embodiment of the application concerned can be flexibly modified according to the specifications and the operations.

### <<1.5. Exemplary functional configuration of autonomous mobile object 10>>

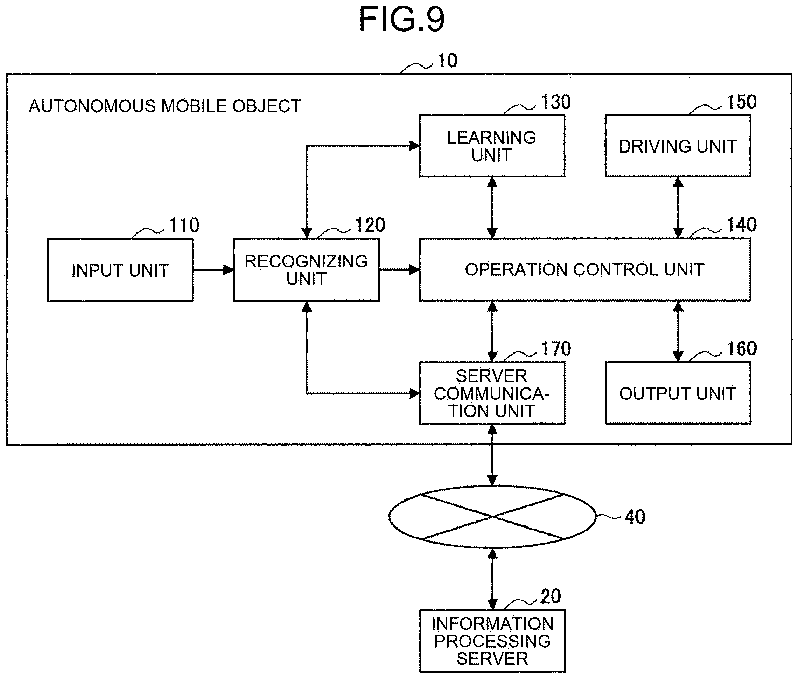

Given below is the explanation of an exemplary functional configuration of the autonomous mobile object 10 according to the embodiment of the application concerned. FIG. 9 is a diagram illustrating an exemplary functional configuration of the autonomous mobile object 10 according to the embodiment of the application concerned. With reference to FIG. 9, the autonomous mobile object 10 according to the embodiment includes an input unit 110, a recognizing unit 120, a learning unit 130, the operation control unit 140, a driving unit 150, an output unit 160, and a server communication unit 170.

### (Input unit 110)

The input unit 110 has the function of collecting a variety of information related to the user and the surrounding environment. For example, the input unit 110 collects the utterances of the user and the surrounding environmental sound, collects image information related to the user and the surrounding environment, and collects a variety of sensor information. For that reason, the input unit 110 includes the various sensors illustrated in FIG. 1.

### (Recognizing unit 120)

The recognizing unit 120 has the function of performing, based on the variety of information collected by the input unit 110, a variety of recognition related to the user, the surrounding environment, and the state of the autonomous mobile object 10. For example, the recognizing unit 120 according to the embodiment can recognize the behavior and the condition of the target person. As an example, the recognizing unit 120 can perform person identification, identification of expressions and glances, object recognition, movement recognition, space region recognition, color recognition, shape recognition, marker recognition, obstacle recognition, level difference recognition, and brightness recognition.

Moreover, the recognizing unit 120 performs word comprehension, emotion recognition, and sound source localization in regard to the voice of the user. Furthermore, the recognizing unit 120 can recognize a touch by the user, the surrounding temperature, the presence of an animal body, and the posture of the autonomous mobile object 10.

Moreover, the recognizing unit 120 according to the embodiment also functions as a map generating unit that generates an environmental map based on the abovementioned recognition result and based on a variety of sensor information collected by the input unit 110.

### (Learning unit 130)

The learning unit 130 has the function of learning the environment (situation), learning the actions, and learning the effects of the actions on the environment. The learning unit 130 performs the abovementioned learning using, for example, a machine learning algorithm such as deep learning. However, the learning algorithm implemented by the learning unit 130 is not limited to that example, and it can be designed as deemed appropriate.

The learning unit 130 according to the embodiment can learn the everyday behavior and the everyday condition of the target person based on a variety of sensor information collected by the input unit 110, and can estimate the behavior and the condition of the target person in the normal condition. Moreover, the learning unit 130 according to the embodiment can learn, as the normal condition regarding the target person, the identification status of the visitors who visit the living space of the target person.

### (Operation control unit 140)

The operation control unit 140 plans the actions of the autonomous mobile object 10 based on the situation estimated by the recognizing unit 120 and based on the knowledge learnt by the learning unit 130, and controls various operations.

For example, the operation control unit 140 according to the embodiment can control the provision of information regarding the everyday life of the target person based on the normal condition of the target person as estimated from the learning result regarding the behavior and the condition of the target person, and based on the recognized behavior and the recognized state of the target person.

Herein, the normal condition can indicate the behavior and the condition that the target person is estimated to perform everyday as estimated by the learning unit 130. For example, the normal condition can include being present in the house during daytime, calling the name of the autonomous mobile object 10, and a touching action such as stroking the autonomous mobile object 10.

Based on recognition or nonrecognition of the behavior and the condition of the target person as included in the scope of the normal condition, the operation control unit 140 according to the embodiment can control the provision of information from the information processing server 20. As an example, the operation control unit 140 can notify the user at the report destination via the information processing server 20 that the target person has performed the action of stroking the autonomous mobile object 10. On the other hand, the operation control unit 140 can notify the user at the report destination via the information processing server 20 that the face of the target person has not been recognized for a predetermined period of time or more.

In this way, in the embodiment, the interaction such as calling the autonomous mobile object 10 or touching the autonomous mobile object 10 is treated as the behavior included in the scope of the normal condition, and a report is sent based on recognition or nonrecognition of such behavior. With that, it becomes possible to perform the watching task with less discomfort and less resistance while getting integrated into the everyday life of the target person.

Meanwhile, when the learning unit 130 estimates a change in the normal condition, the operation control unit 140 can notify the user at the report destination via the information processing server 20 about information regarding the change. For example, the operation control unit 140 can notify the user at the report destination that there is a decrease in the number of times of calling or touching the autonomous mobile object 10 as compared to before.

Moreover, when the behavior and the condition of the target person that is not included in the scope of the normal condition is recognized, the operation control unit 140 according to the embodiment can control the information processing server 20 to ensure that information regarding deviation from the normal condition is provided. For example, when violent coughing by the target person for a long period of time is not included in the scope of the normal condition, the operation control unit 140 can perform control to ensure that the user at the report destination is notified about the detection of violent coughing by the target person or about the detection of a behavior or a condition that has deviated from the scope of the normal condition.

As a result of such control performed by the operation control unit 140 according to the embodiment, the watching task can be performed with reference to the normal condition that is estimated by learning, thereby enabling flexible and effect watching corresponding to the everyday life of each target person. Meanwhile, regarding specific examples of the watching task and the reporting according to the embodiment, the explanation is given separately later.

### (Driving unit 150)

The driving unit 150 has the function of bending a plurality of joint regions of the autonomous mobile object 10 under the control of the operation control unit 140. More particularly, under the control of the operation control unit 140, the driving unit 150 drives the actuators 570 installed in the joint regions.

### (Output unit 160)

The output unit 160 has the function of outputting visual information and audio information under the control of the operation control unit 140. For that purpose, the output unit 160 includes the displays 510 and speakers.

### (Server communication unit 170)

The server communication unit 170 has the function of communicating information with the information processing server 20 via the network 40. For example, the server communication unit 170 sends, to the information processing server 20, information about the result of the watching task as generated by the operation control unit 140. Moreover, for example, the server communication unit 170 receives information regarding the settings for the watching task from the information processing server 20.

Till now, the explanation was given about an exemplary functional configuration of the autonomous mobile object 10 according to the embodiment of the application concerned. However, the configuration explained with reference to FIG. 9 is only exemplary, and the functional configuration of the autonomous mobile object 10 according to the embodiment of the application concerned is not limited to that example. That is, the functional configuration of the autonomous mobile object 10 according to the embodiment of the application concerned can be flexibly modified according to the specifications and the operations.

### <<1.6. Exemplary functional configuration of information processing server 20>>

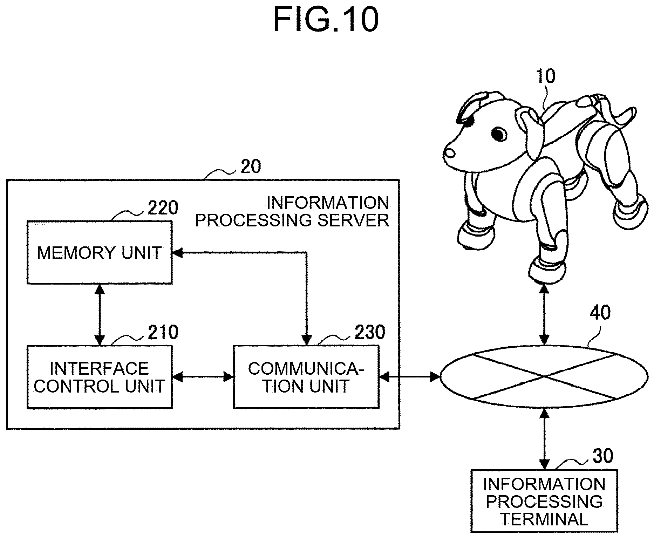

Given below is the explanation of an exemplary functional configuration of the information processing server 20 according to the embodiment of the application concerned. FIG. 10 is a diagram illustrating an exemplary functional configuration of the information processing server 20 according to the embodiment of the application concerned. With reference to FIG. 10, the information processing server 20 according to the embodiment of the application concerned includes an interface control unit 210, a memory unit 220, and a communication unit 230.

### (Interface control unit 210)

The interface control unit 210 controls a user interface that is used in providing the user at the report destination with the information regarding the everyday life of the target person, that is, the information regarding the task of watching the target person as received from the autonomous mobile object 10. The interface control unit 210 according to the embodiment has the function of providing the user interface in, for example, the information processing terminal 30 that is in possession of the user at the report destination; and, based on the information received from the autonomous mobile object 10, displaying, in the user interface, information such as a report regarding the watching task. Moreover, in the user interface according to the embodiment, various settings regarding the watching task can be made settable. Regarding the details of the user interface according to the embodiment, the explanation is given separately later.

### (Memory unit 220)

The memory unit 220 is used to store a variety of information regarding the task of watching the target person as performed by the autonomous mobile object 10. For example, the memory unit 220 is used to store the information about the user representing the target person for watching, and to store the information about the user at the report destination with respect to the target person.

### (Communication unit 230)

The communication unit 230 communicates information with the autonomous mobile object 10 or the information processing terminal 30 via the network 40. For example, the communication unit 230 receives information such as reports regarding the watching task from the autonomous mobile object 10. Moreover, for example, the communication unit 230 sends control signals regarding the display of the user interface to the information processing terminal 30.

Till now, the explanation was given about an exemplary functional configuration of the information processing server 20 according to the embodiment of the application concerned. However, the configuration explained with reference to FIG. 10 is only exemplary, and the functional configuration of the information processing server 20 according to the embodiment is not limited to that example. For example, the information processing server 20 can further have the function of performing various types of recognition based on the sensor information collected by the autonomous mobile object 10, and the function of learning. Meanwhile, the functions of the interface control unit 210 can be implemented as the functions of the autonomous mobile object 10. Thus, the functional configuration of the information processing server 20 according to the embodiment can be flexibly modified according to the specifications and the operations.

### <<1.7. Details of watching task>>

Given below is the detailed explanation about the task of watching the target person as performed by the autonomous mobile object 10 according to the embodiment. As explained above, the autonomous mobile object 10 according to the embodiment is characterized by the function of recognizing the behavior and the condition included in the normal condition, such as the whereabouts of the target person, an utterance of the target person, and a touching action with respect to the autonomous mobile object 10; and, based on recognition or nonrecognition of the behavior and the condition, controlling the provision of information to the user at the report destination.

The watching task performed by the autonomous mobile object 10 according to the embodiment is broadly divided into three modes. In a first mode, the watching task is continuously performed during the autonomous operations (during the operating state) of the autonomous mobile object 10. In the first mode, excluding the power recharging time of the autonomous mobile object, the watching task can be performed in a more secured manner over a long period of time and over a wide range.

Meanwhile, depending on the target person, he or she may sense a resistance toward being monitored day and night. Thus, for example, it is possible to think of a situation in which, as a result of being overly self-conscious about the fact that the watching function is enabled, the target person is not able to sufficiently enjoy the natural interaction with the autonomous mobile object 10.

For that reason, in a second mode, the autonomous mobile object 10 according to the embodiment can patrol along a preset route at a preset time, and can report the information regarding the behavior and the condition of the target person as recognized during the patrol.

In the second mode according to the embodiment, as a result of restricting the time and the route for performing the watching task, it becomes possible to alleviate the resistance sensed by the target person as well as to strongly protect the privacy of the target person.

Meanwhile, in the first mode and the second mode, since a report regarding the watching task is delivered proactively by the autonomous mobile object 10, those modes can be said to be passive functions for the user at the report destination. However, for example, in the event of an emergency such as not being able to be in contact with the target person for a long period of time, it is possible to think that the user at the report destination would want to instruct the autonomous mobile object 10 to immediately perform the watching task.

For that reason, according to the embodiment, a third mode can be set in which the autonomous mobile object 10 patrols in response to a request from the user at the report destination and provides a video captured during the patrol to that user at the report destination. Moreover, at that time, the user at the report destination can be enabled to remote-control the operations of the autonomous mobile object 10 via a user interface controlled by the information processing server 20.

As explained above, the autonomous mobile object 10 according to the embodiment can be used in a plurality of modes depending on the needs of the target person or the user at the report destination. That enables performing the watching task in a more flexible manner.

Given below is the explanation of an example of the user interface that is used in performing the settings for the first mode to the third mode. Regarding the user interface explained below, the input-output is controlled by the interface control unit 210 of the information processing server 20. For example, that user interface according to the embodiment can be accessed by the target person for watching or by the user at the report destination via the information processing terminal 30 such as a smartphone in possession.

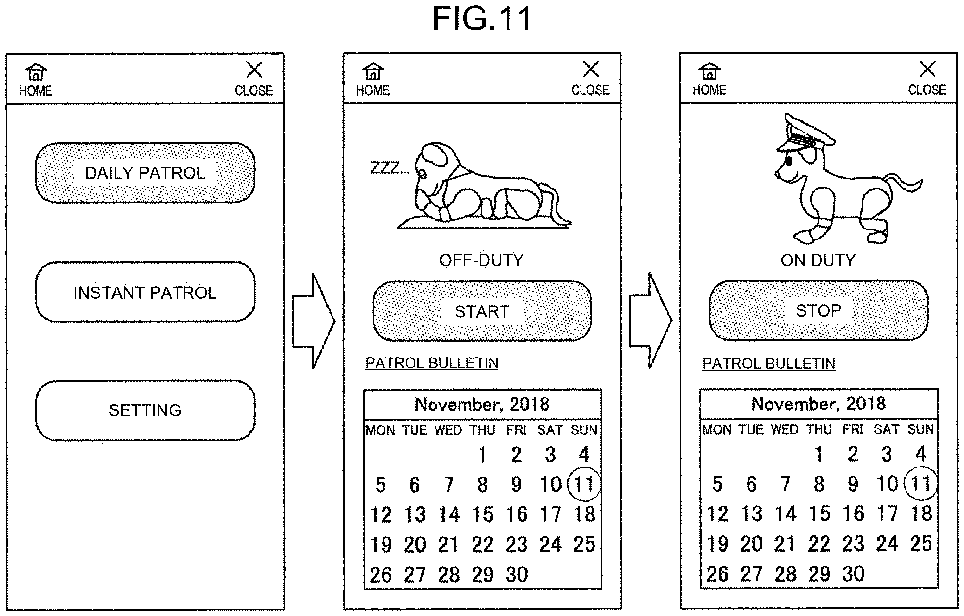

In FIG. 11 is illustrated an example of the user interface to be used in performing the settings for the execution of a patrol according to the embodiment. Thus, in FIG. 11 is illustrated an exemplary screen for enabling the user at the report destination to set execution or nonexecution of a patrol in the second mode or the third mode.

For example, in the case of enabling patrolling in the second mode, that is, enabling patrolling along a preset route at a preset time, the user at the report destination can press a "daily patrol" button displayed in the screen and set execution or nonexecution of a patrol.

In the example illustrated in FIG. 11, after pressing the "daily patrol" button, the user further presses a "start" button so as to enable patrolling in the second mode. At that time, it is possible to change the avatar of the autonomous mobile object 10 and the message that are displayed on the screen, so as to indicate to the user that patrolling has been enabled.

Similarly, in the second mode, when patrolling is enabled, if the user presses a "stop" button, the setting can be switched to nonexecution of a patrol. In this way, in the second mode according to the embodiment, the user can flexibly set execution or nonexecution of a patrol depending on the situation. Due to such settings, for example, when the target person for watching is going to be absent from the living place for a long period of time, unnecessary patrolling and reporting can be avoided.

Till now, the explanation was given about the settings for execution or nonexecution of a patrol in the second mode according to the embodiment. In the exemplary screen illustrated in FIG. 11, the user at the report destination can be enabled to instruct immediate execution of a patrol in the third mode by pressing an "instant patrol" button. Regarding the details of patrolling performed in the third mode according to the embodiment, the explanation is given separately later.

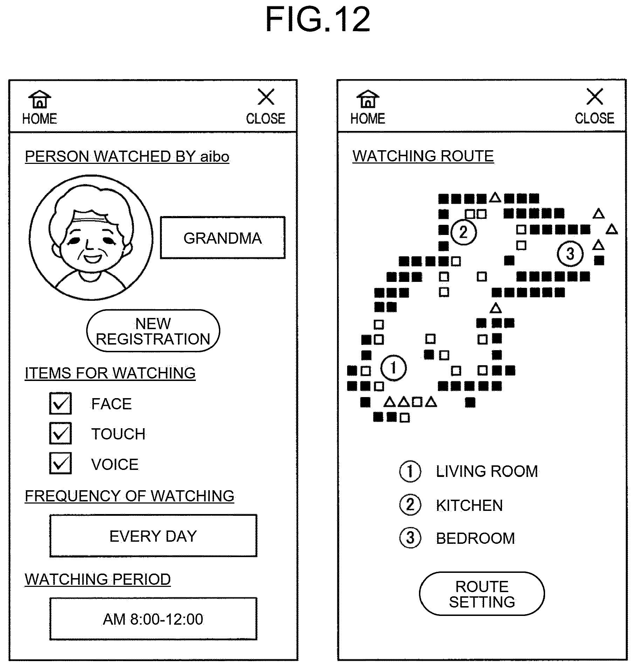

Given below is the explanation about setting the user who represents the target person for watching according to the embodiment, and about setting a patrol in the second mode. In FIG. 12 is illustrated an example of the user interface to be used in setting the user who represents the target person for watching according to the embodiment, and setting a patrol in the second mode according to the embodiment. In FIG. 12, for the sake of convenience, two screens are displayed, one on the left side and one on the right side. However, in practice, the two screens can be displayed as a single screen scrollable in the vertical direction.

In the example illustrated in FIG. 12, in order from the top left portion, buttons are provided for performing the following settings: the target person for watching (person to be watched), the items for watching, the frequency of watching, the watching period, and the watching route.

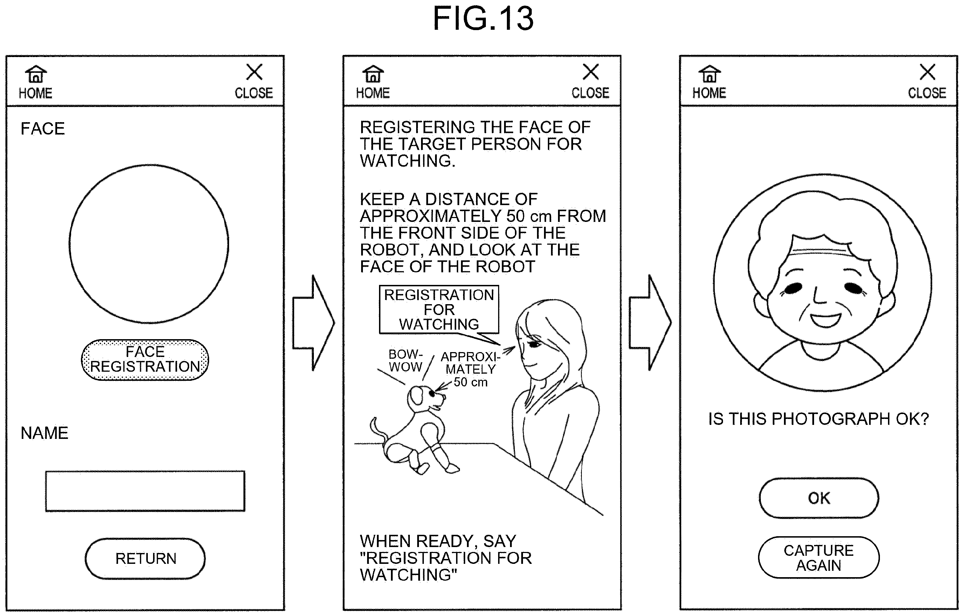

The user representing the target person for watching can press a "new registration" button displayed in the top left portion on the screen and register himself or herself as the target person for watching. In FIG. 13 is illustrated an example of the user interface to be used in setting the target person for watching according to the embodiment.

In the settings for the target person for watching according to the embodiment, an image of the face of the target person and the form of addressing the target person is registered. For example, the target person can press a "face registration" button displayed in the screen on the left side, so as to activate the camera of the autonomous mobile object 10 and get an image of his or her face registered.

At that time, for example, as illustrated in in the middle part in FIG. 13, it is possible to display the method for taking a photograph as required by the autonomous mobile object 10 to perform accurate recognition. The user representing the target perform for watching can take a photograph according to that method, and can register the photographed image as illustrated on the right side in FIG. 13. Moreover, in a field illustrated on the left side in FIG. 13, the user can arbitrarily register the name by which he or she wants to be addressed.

Till now, the explanation was given about an example of setting the target person for watching according to the embodiment. In the embodiment, for example, when the user representing the target person for watching registers himself or herself, it becomes possible to prevent a situation in which the watching task is performed without the consent from the target person. Meanwhile, the settings and the consent of the target person for watching can be obtained, for example, at the time of making the contract for the service.

Returning to the explanation with reference to FIG. 12, the explanation about the settings for a patrol in the second mode is continued below. As illustrated in FIG. 12, the user representing the target person for watching or the user at the report destination can use the user interface to perform various settings for a patrol in the second mode.

For example, the user can arbitrarily select the items to be included for recognition and reporting during the patrol. In FIG. 12, examples of the items include "face", "touching", and "voice" (utterance).

If the user selects "face", then the autonomous mobile object 10 can control the provision of information to the report destination based on recognition or nonrecognition of the face of the target person during the patrol.

If the user selects "touching", then the autonomous mobile object 10 can control the provision of information to the report destination based on recognition or nonrecognition of a physical contact by the target person with the autonomous mobile object 10 during the patrol.

If the user selects "voice", then the autonomous mobile object 10 can control the provision of information to the report destination based on recognition or nonrecognition of an utterance by the target person during the patrol.

In this way, in the embodiment, the user can arbitrarily set the items to be included for recognition and reporting. That enables performing the watching task in a flexible manner in accordance with the condition of the target person.

Moreover, the user can be enabled to arbitrarily set the frequency and the time of execution of a patrol in the second mode. Thus, the user can select the frequency of execution of a patrol from, for example, every day, alternate days, and weekdays; or can freely set the frequency without being restricted by the examples given above.

Regarding the time for execution of a patrol in the second mode, the user can select a time slot from among a plurality of time slots, or can freely input a time slot.

Moreover, the user can be enabled to arbitrarily set the route of a patrol in the second mode. In the example illustrated in FIG. 12, the user has set the route that passes through the living room, the kitchen, and the bedroom.

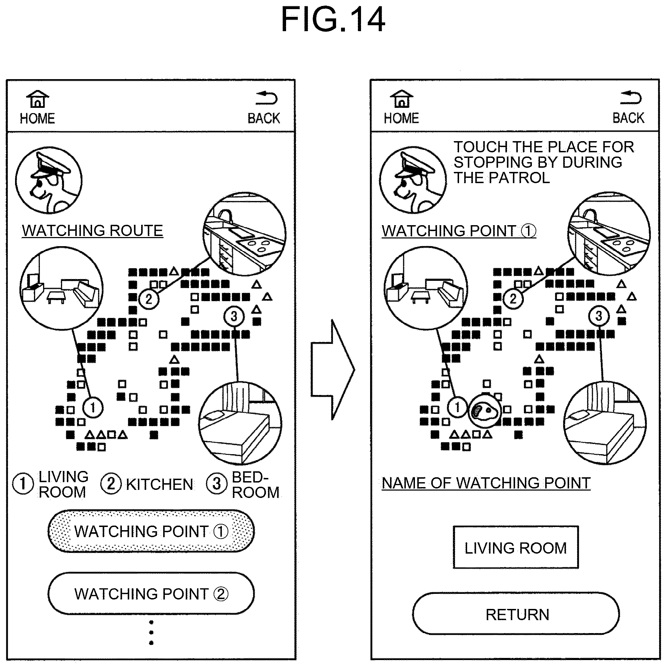

FIG. 14 is a diagram for explaining about setting the route of a patrol according to the embodiment. In FIG. 14 is illustrated an exemplary screen for setting the route. For example, the user can set the route by referring to the map of the living space of the target person as displayed on the screen, selecting arbitrary points by touching them, and inputting names.

The map can be the environmental map generated by the recognizing unit 120 of the autonomous mobile object 10, or can be a comprehensive environmental map in which the user has superimposed information such as the room layout on the abovementioned environmental map. In FIG. 14 is illustrated an example in which the environmental map generated by the recognizing unit 120 is displayed.

At that time, for example, as illustrated in FIG. 14, the user can set a plurality of watch points, at which the autonomous mobile object 10 stops by during the patrol, by touching the environmental map or by inputting the names of the watch points.

In this way, because of the user interface according to the embodiment, the user can flexibly set a plurality of points which is related to a patrol in the second mode and at which the autonomous mobile object 10 is to be made to stop by. As a result, the autonomous mobile object 10 can be made to patrol, on priority, the points at which the target person for watching is highly likely to be present at normal times or during specific time slots. That not only enables patrolling in an efficient manner, but the privacy of the target person can also be protected by excluding the places not desired to be visited during the patrol.

Till now, the explanation was given about setting the route of a patrol in the second mode according to the embodiment. Based on such route setting, the operation control unit 140 according to the embodiment can control the patrol by the autonomous mobile object 10 and can control the provision of information regarding the behavior and the condition of the target person during the patrol.

More specifically, based on the environmental map generated by the recognizing unit 120 accompanying the autonomous movement of the autonomous mobile object 10 and based on the route setting specified by the user, the operation control unit 140 according to the embodiment can control the patrol by the autonomous mobile object 10.

Meanwhile, the operation control unit 140 according to the embodiment can automatically decide on the patrolling route based on the normal condition of the target person as learnt by the learning unit 130. For example, based on the estimation by the learning unit 130 that the target person is often at home during 8 am to 12 noon in the normal condition, the operation control unit 140 can automatically set that time slot as the patrolling time.

Alternatively, based on the estimation by the learning unit 130 that the target person is often present in the living room, the kitchen, or the bedroom in the normal condition; the operation control unit 140 can automatically set a route passing through those places.

Because of the abovementioned functions of the operation control unit 140 according to the embodiment, the time slot in which the target person is highly likely to be present or the places at which the target person is highly likely to be present can be used for a patrol on a priority basis, thereby making it possible to perform the watching task in a more effective manner.

Till now, the detailed explanation was given about setting the route for patrolling in the second mode according to the embodiment. Given below is the explanation of the behavior of the autonomous mobile object 10 during a patrol in the second mode.

As explained above, among the users representing the target persons for watching, it is possible to think that there would be some target persons who, as a result of being overly self-conscious about the fact that the watching function of the autonomous mobile object 10 is enabled, are not able to sufficiently enjoy the natural interaction with the autonomous mobile object 10.

In order to avoid such a scenario, the autonomous mobile object 10 according to the embodiment can vary its behavior during normal autonomous operations and during a patrol. That is, the autonomous mobile object 10 according to the embodiment can express, using actions, the fact that patrolling is underway, and thus can make the target person aware of the fact that information is being collected for providing it to the report destination.

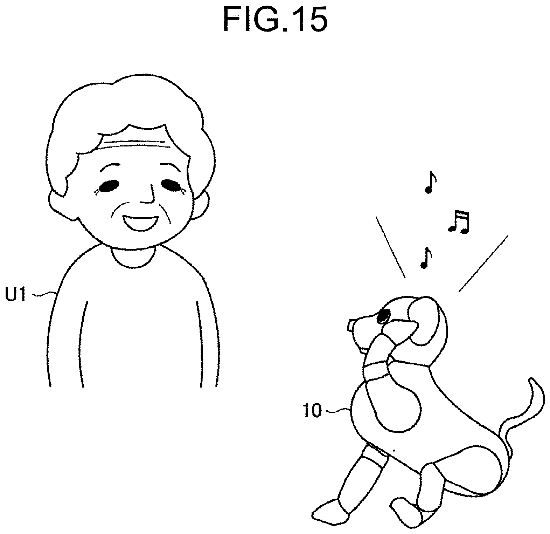

FIG. 15 is a diagram for explaining about the behavior of the autonomous mobile object 10 during a patrol in the second mode according to the embodiment. As explained above, in the second mode, the autonomous mobile object 10 performs patrolling based on the set route. At that time, the autonomous mobile object 10 needs to move for a long distance while understanding the shape of the rooms of the target person. Hence, in the second mode, the autonomous mobile object 10 can be enabled to move a longer distance at a time than during the normal autonomous movement (meanwhile, the walking speed can be at a comparable level to the walking speed during the normal autonomous movement).

Moreover, in order to efficiently move for a longer distance at a time, the autonomous mobile object 10 is characterized by the function of moving more rapidly than during the normal autonomous movement. More particularly, in the second mode, the operation control unit 140 according to the embodiment can make the autonomous mobile object 10 walk with a straight back, a high chest, a long stride, and a constant rhythm, so as to choreograph patrolling.

In this way, the operation control unit 140 according to the embodiment can vary the movement form of the autonomous mobile object 10 during execution and nonexecution of a patrol, so as to make the user aware about patrolling.

Moreover, when the target person is recognized during the patrol, the operation control unit 140 can make the autonomous mobile object 10 send a salute to the user U1, who represents the target person, as illustrated in FIG. 15, so as to choreograph patrolling. Furthermore, the operation control unit 140 can make the autonomous mobile object 10 take actions, other than sending a salute, peculiar to patrolling, such as an action of elaboratively taking a sniff and wagging the tail or an action of making a marking at the end of the patrol. On the other hand, the operation control unit 140 can perform control in such a way that the actions frequently appearing at normal times, such as giving a paw, are not performed during a patrol.

Furthermore, for example, the operation control unit 140 can also make the autonomous mobile object 10 output a music that, for example, evokes the police.

In this way, the operation control unit 140 according to the embodiment can express, using actions, the fact that patrolling is underway, and thus can make the target person aware of the fact that information is being collected for providing it to the report destination. As a result, without being constantly conscious about the collection of information, the target person can enjoy the natural interaction with the autonomous mobile object 10.

Given below is the explanation about the provision of information to the report destination according to the embodiment. As explained above, in the first mode or the second mode, the autonomous mobile object 10 according to the embodiment can recognize the behavior and the condition of the user representing the target person for watching, and can control the provision of information to the user at the report destination.

At that time, the operation control unit 140 sends the result of various types of recognition to the information processing server 20 via the server communication unit 170, and performs control to ensure that the information intended for the user at the report destination is provided in the user interface.

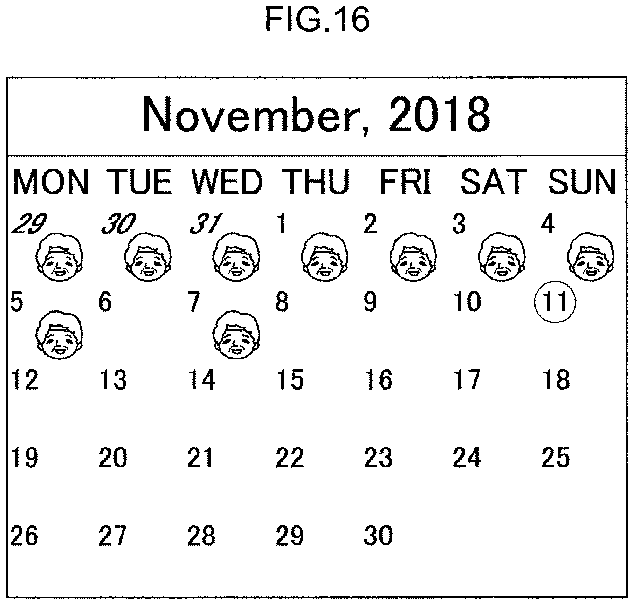

For example, the operation control unit 140 can perform control in such a way that simplified information (a watch report) is provided based on recognition or nonrecognition of the face of the target person, a touching action, and recognition or nonrecognition of an utterance. In FIG. 16 is illustrated an example of a simplified watch report according to the embodiment.

In the example illustrated in FIG. 16, under the control of the operation control unit 140, the interface control unit 210 of the information processing server 20 displays, in the form of a calendar, recognition or nonrecognition regarding the target person. For example, on the days on which the autonomous mobile object 10 recognizes the face of the target person, or recognizes a touching action by the target person, or recognizes an utterance by the target person; the interface control unit 210 can display the captured image of the target person and indicate to the report destination that the target person is in the normal condition.

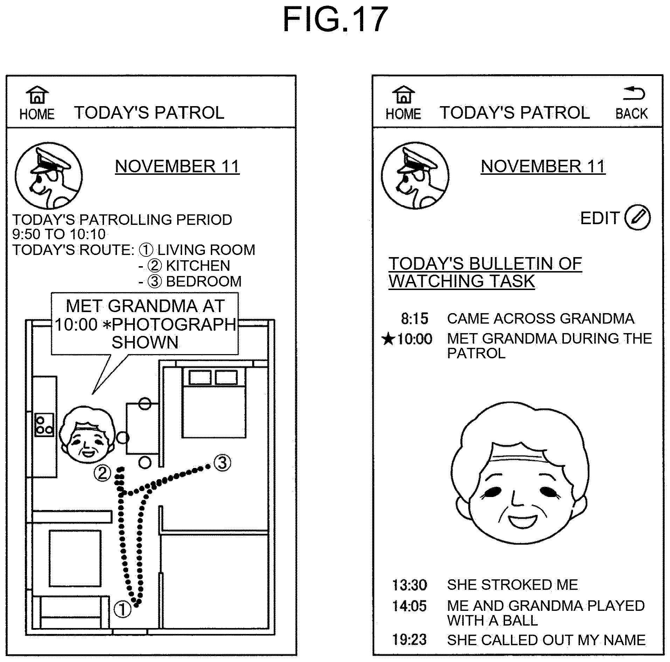

Meanwhile, the operation control unit 140 according to the embodiment can also perform control in such a way that more detailed information is provided based on the recognition result. In FIG. 17 is illustrated an example of the detailed watch report according to the embodiment. In the example illustrated on the left side in FIG. 17, the interface control unit 210 displays, in a detailed manner, the time at which patrolling was done in the second mode, the route of that patrolling, and the image of the target person captured during patrolling in a corresponding manner to the environmental map. As explained earlier, the environmental map according to the embodiment can be a comprehensive environmental map in which information such as the room layout is superimposed on the environmental map generated by the recognizing unit 120.

In the example illustrated on the right side in FIG. 17, the interface control unit 210 displays, in chronological order, the result of recognizing the face of the target person, recognizing a touching action by the target person, and recognizing an utterance by the target person. Moreover, in an identical manner to the example illustrated on the left side in FIG. 17, the interface control unit 210 can also provide the image of the target person and the recorded voice of the target person.

In this way, the operation control unit 140 and the interface control unit 210 according to the embodiment enable providing the user at the report destination with a simplified report or a detailed report about the task of watching the target person. Meanwhile, a simplified report and a detailed report can be sent together at the same time, or only one of those reports can be sent.

For example, the user at the report destination can press an arbitrary date of the simplified report in the user interface, and can check the corresponding detailed report. Moreover, for example, the user representing the target person for watching can perform setting to turn OFF the detailed report and to send only the simplified report, with the aim of emphasizing his or her privacy.

Till now, the explanation about the provision of information to the report destination according to the embodiment was given with reference to specific examples. The explanation given above is about the example in which the information is provided based on the recognition or nonrecognition of the face, or a touching action, or an utterance. However, the provision of information according to the embodiment is not limited to that example. That is, the autonomous mobile object 10 according to the embodiment can control the provision of a variety of information regarding watching the target person based on the normal condition of the target person and based on the recognized behavior and the recognized condition of the target person.

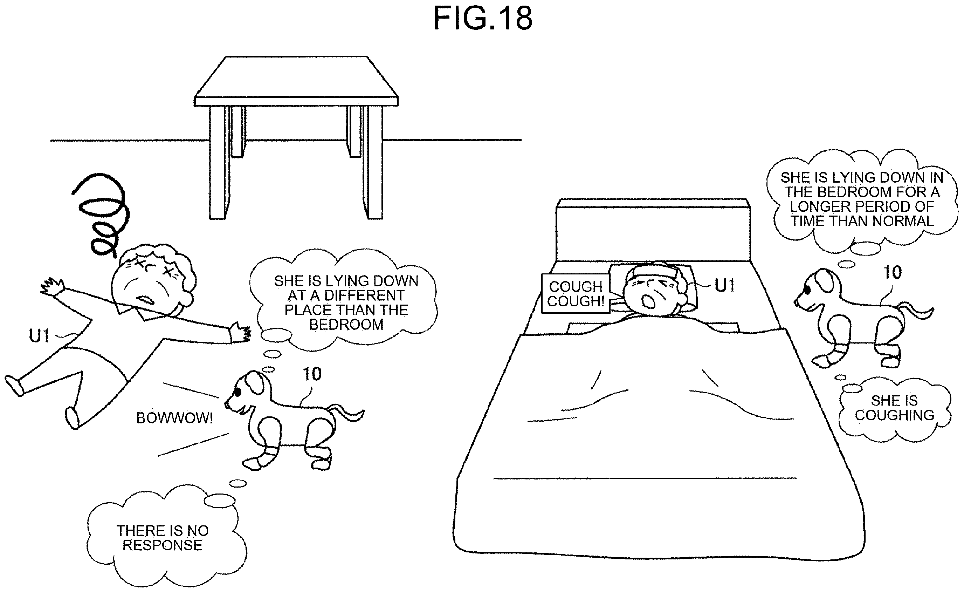

In FIGS. 18 to 23 are illustrated specific examples of the watching task performed by the autonomous mobile object 10 according to the embodiment. For example, in the example illustrated on the left side in FIG. 18, the recognizing unit 120 has recognized that the user U1 representing the target person is lying down at a different place than the bedroom, which is unlike the normal condition. Moreover, although the operation control unit 140 makes the autonomous mobile object 10 perform a barking action based on that recognition, there is no response from the user U1 to the barking action. At that time, the operation control unit 140 according to the embodiment can determine that the user U1 representing the target person has significantly deviated from the normal condition, and can control the information processing server 20 to send an emergency report to the user at the report destination.

Moreover, for example, in the example illustrated on the right side in FIG. 18, the recognizing unit 120 has recognized that the user U1 representing the target person is lying down in the bedroom for a longer period of time as compared to the normal condition and has recognized that the user U1 is violently coughing. In that case too, in an identical manner, the operation control unit 140 according to the embodiment determines that the user U1 representing the target person has significantly deviated from the normal condition, and can perform control to ensure that an emergency report is sent to the user at the report destination. In this way, when the behavior or the condition of the target person is recognized to be outside the scope of the normal condition, the operation control unit 140 according to the embodiment can perform control to ensure that information regarding the deviation from the normal condition is provided.

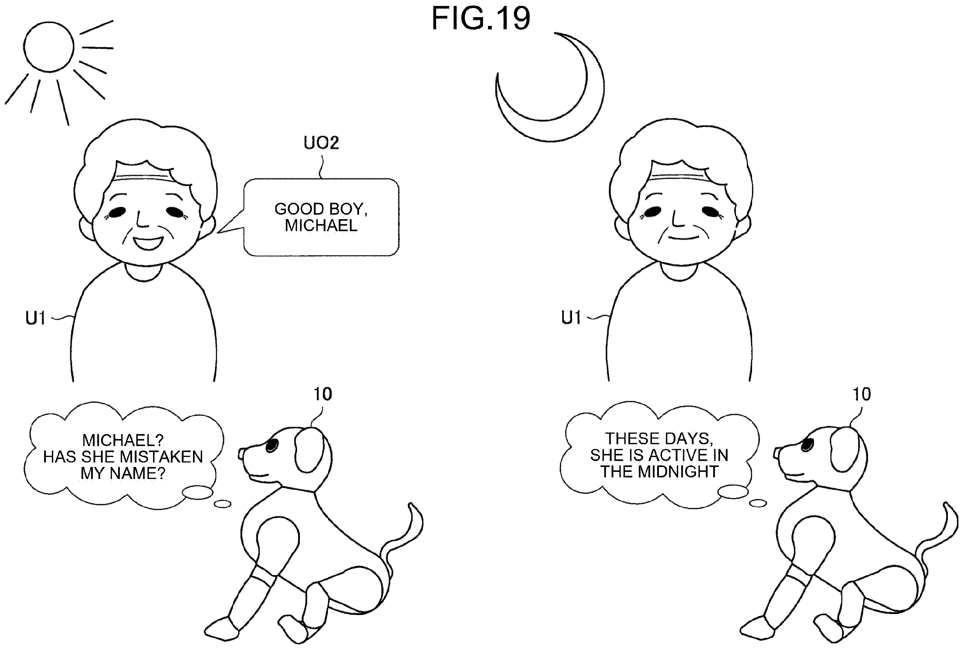

Meanwhile, apart from watching the physical condition of the target person, the autonomous mobile object 10 according to the embodiment can also watch the mental condition. For example, in the example illustrated on the left side in FIG. 19, the user U1 is addressing the autonomous mobile object 10 in an utterance UO2. However, at that time, the user U1 has wrongly uttered the name of the autonomous mobile object 10.

In that case, based on the fact that the learning unit 130 has estimated a change in the normal condition of the user U1 such as an increase in the frequency of mistaking the name of the autonomous mobile object 10 by the user U1, the operation control unit 140 according to the embodiment can perform control to ensure that the information regarding that change is provided to the report destination.

Moreover, in the example illustrated on the right side in FIG. 19, based on the fact that the learning unit 130 has estimated a change in the normal condition of the user U1 such as recently becoming active in the midnight, the operation control unit 140 can perform control to ensure that the information regarding that change is provided to the report destination.

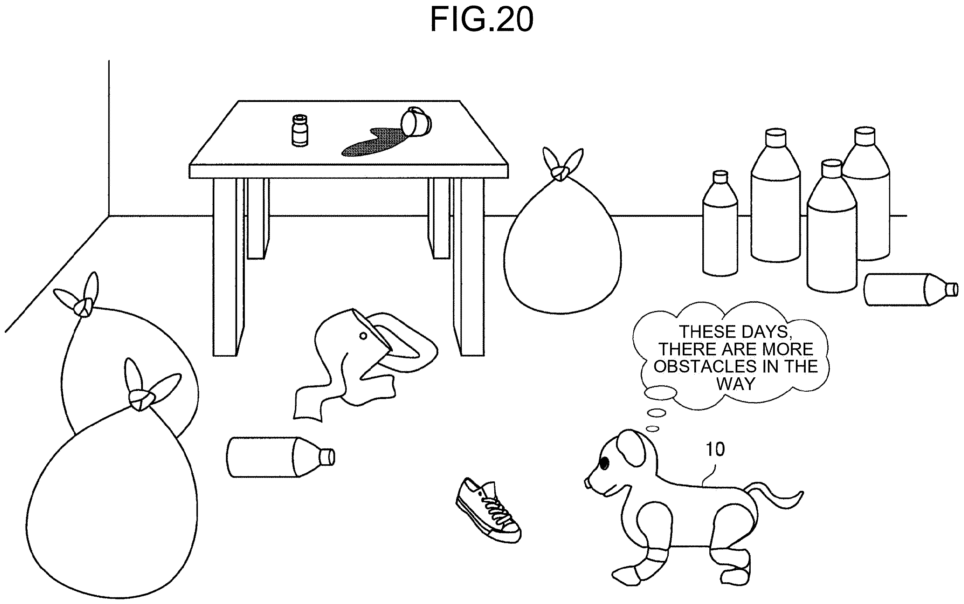

In the example illustrated in FIG. 20, based on the fact that the learning unit 130 has estimated a change in the normal condition such as a recent increase in the obstacles in the living space of the user U1, that is, in the activity space of the autonomous mobile object 10; the operation control unit 140 can perform control to ensure that the information regarding that change is provided to the report destination. Herein, the learning unit 130 can estimate an increase in the obstacles based on the result of object recognition performed by the recognizing unit 120 or based on the changes in the environmental map.

The abovementioned examples such as mistaking the name, a change in the activity time, and an increase in the obstacles can lead to the estimation that the room is in mess; and fit into the case of dementia. In this way, as a result of using the autonomous mobile object 10 according to the embodiment, not only the physical abnormality of the target person can be detected early, but the psychic aberration can also be detected early. Thus, the watching task having more effectiveness can be performed.

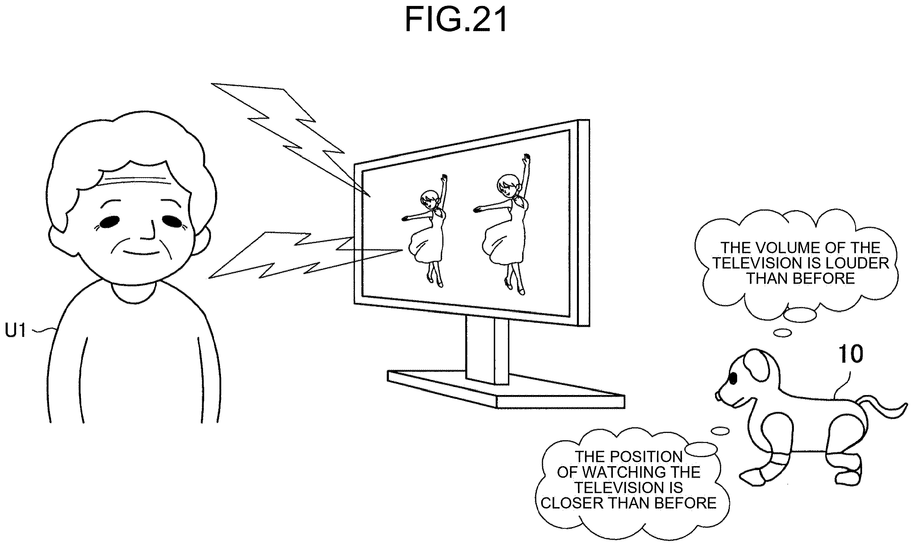

Moreover, the autonomous mobile object 10 according to the embodiment can perform the watching task based on the behavior of the target person with respect to other devices. For example, in the example illustrated in FIG. 21, based on the fact that the set volume of the television is louder than before or the fact that the position of watching the television has become closer than before; the operation control unit 140 can estimate that there is a decline in the hearing ability or the power of vision, and perform control to ensure that a report regarding that estimation is sent. At that time, the operation control unit 140 can perform the abovementioned control based on the information about the amount of volume received from the television. In this way, in addition to the result of recognition performed with respect to the target person, based on the information received from other devices too; the operation control unit 140 according to the embodiment can control the provision of information regarding the watching task.

Furthermore, the operation control unit 140 according to the embodiment can control the provision of information based on the schedule of the target person. For example, if the schedule of the target person as registered in a scheduling application is not consistent with the behavior of the target person, then the operation control unit 140 can perform control to ensure that the information is provided to the report destination.

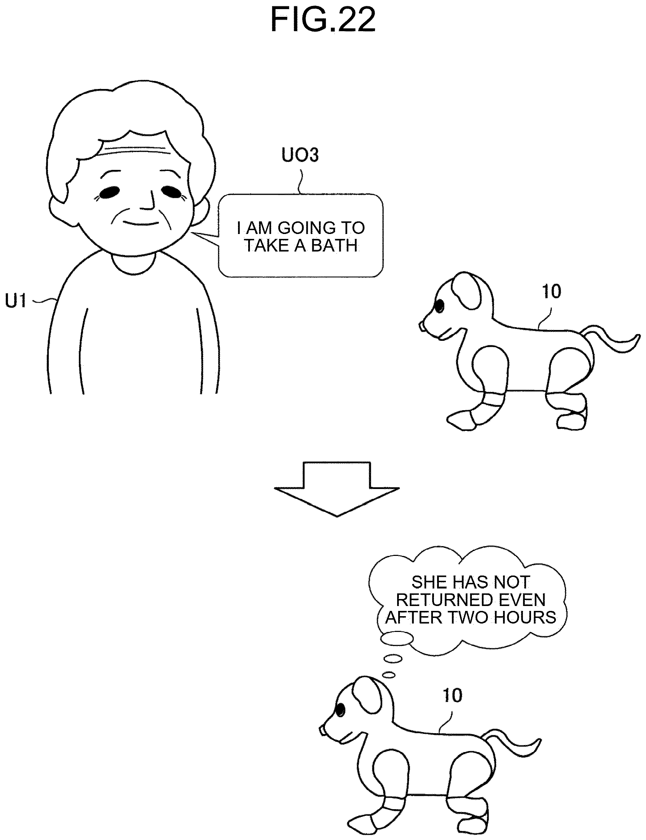

Herein, the schedule need not be explicitly input by the target person. For example, in the example illustrated in FIG. 22, the user U1 representing the target person gives an utterance UO3 about taking a bath with respect to the autonomous mobile object 10. At that time, based on the recognized utterance UO3, the operation control unit 140 can automatically register "bath" along with the estimated bathing time in the internally-maintained schedule of the user U1.

For example, as illustrated in FIG. 22, if the user U1 does not return even after the estimated bathing time has significantly elapsed, then the operation control unit 140 can perform control to ensure that an emergency report is sent to the user at the report destination.

Till now, the explanation was focused on the case in which the operation control unit 140 controls the provision of information to the report destination based on the result of recognition regarding the target person. However, alternatively, the operation control unit 140 can control the provision of information to the report destination based on the result of recognition regarding other persons or objects. For example, as explained earlier, the learning unit 130 according to the embodiment can learn, as the normal condition regarding the target person, the identification status of the visitors who visit the living space of the target person. In that case, the operation control unit 140 according to the embodiment can control the provision of information to the report destination based on the abovementioned normal condition and the result of identification of the visitors. As an example, if the identification status of a visitor not included in the scope of the normal condition is obtained, then the operation control unit according to the embodiment performs control to ensure that the information regarding that visitor is provided to the report destination.

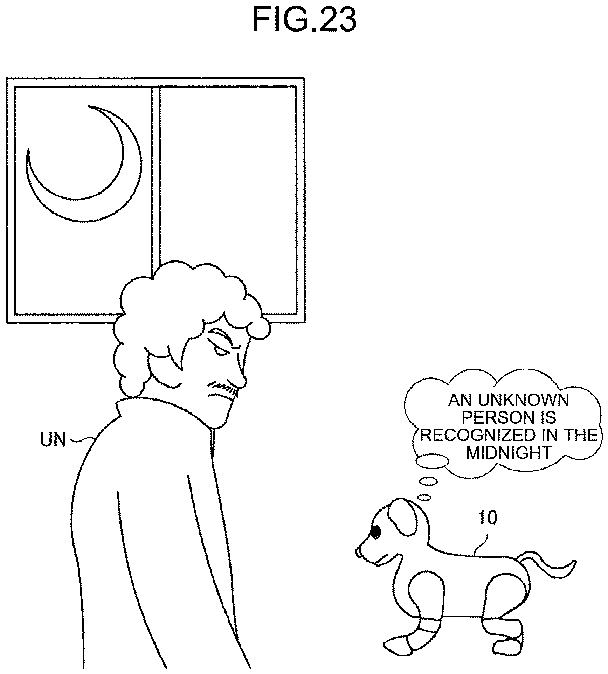

For example, in the example illustrated in FIG. 23, the recognizing unit 120 recognizes an unidentifiable person UN in the midnight. At that time, based on the fact that the person UN who has not been identified in the normal condition is recognized and based on the fact that the person UN is identified in the midnight, the operation control unit 140 according to the embodiment can determine that the visit from the person UN is not included in the scope of the normal condition and can perform control to ensure that an emergency report is sent to the user at the report destination. Moreover, the operation control unit 140 can control the emergency report based on the fact that the person UN is recognized not at the entrance but indoor.

As a result of such control performed by the operation control unit 140, it becomes possible to promptly sense a suspicious individual or an illegal intruder and take appropriate countermeasures. Meanwhile, the example explained with reference to FIG. 23 is not the only possible case, and the operation control unit 140 according to the embodiment can perform control for provision of a variety of information based on the identification status of the visitors.

For example, the operation control unit 140 can control the provision of information based on the number of visits, the interval of visits, and the time of visits. For example, consider a case in which some malicious merchant starts to frequently visit the house of the target person. At that time, based on the fact that a person not identified in the past has started visiting the house of the target person for a number of times during a predetermined period of time, the operation control unit 140 can perform control to ensure that the user at the report destination is warned.

Moreover, the operation control unit 140 can also perform control to ensure that, for example, the visiting status of the acquaintances of the target person is provided to the report destination. More particularly, for example, the operation control unit 140 can display a message such as "Ms. Tanaka, who is a friend of the grandma, came by today also to check on the grandma" can be displayed in the user interface. As a result of such control, the user at the report destination can get to know the circle of friends of the target person, and thus to gain a sense of reassurance.

Till now, the explanation was given about the specific examples of the watching task performed by the autonomous mobile object 10 according to the embodiment. As explained above, the autonomous mobile object 10 according to the embodiment can estimate abnormality based on the result of various types of recognition regarding the target person, and can control the provision of information regarding the abnormality.

Given below is the detailed explanation of the third mode according to the embodiment. As explained above, in the first mode and the second mode according to the embodiment, since a report regarding the watching task is delivered proactively by the autonomous mobile object 10, those modes can be said to be passive functions for the user at the report destination. However, for example, in the event of an emergency such as not being able to be in contact with the target person for a long period of time, it is possible to think that the user at the report destination would want to instruct the autonomous mobile object 10 to immediately perform the watching task.

For that reason, the third mode according to the embodiment can be set in which the autonomous mobile object 10 patrols in response to a request from a user who has been allowed in advance by the target person, such as in response to a request from the user at the report destination.

At that time, based on the request from the user who has been allowed in advance by the target person, the operation control unit 140 according to the embodiment can control the patrol by the autonomous mobile object 10 and can control the operations of the autonomous mobile object 10 based on an input from the user during the patrol.

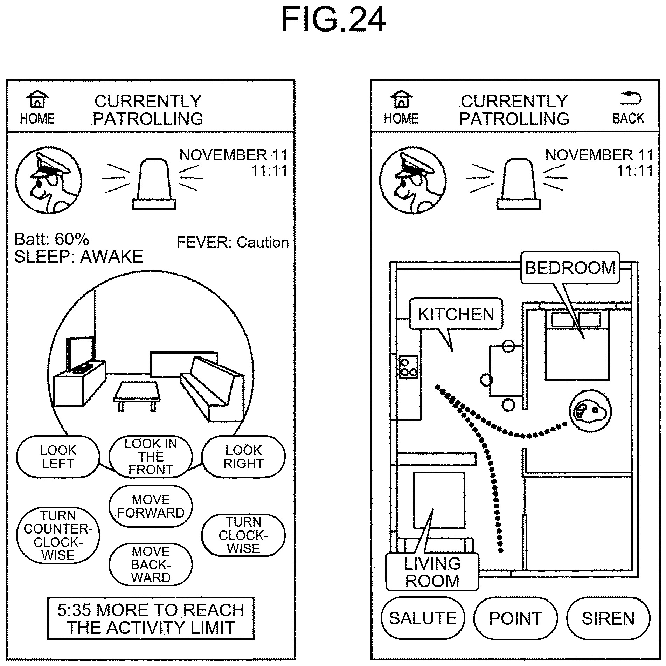

FIG. 24 is a diagram for explaining the patrolling performed in the third mode according to the embodiment. As explained above, in the third mode according to the embodiment, the operation control unit 140 controls the patrolling in response to a request from a user who has been allowed in advance by the target person, such as the user at the report destination.

The user at the report destination can press, for example, "instant patrol" button illustrated in FIG. 11, so that a patrol in the third mode can be started. At that time, for example, in the screen as illustrated in FIG. 24, the user controls the operations of the autonomous mobile object 10.

In the example illustrated on the left side in FIG. 24, while looking and listening to the streaming of the actions captured by input unit 110 of the autonomous mobile object 10, the user can control the movement of the autonomous mobile object 10 (the forward movement, the backward movement, the counter-clockwise turning, and the clockwise turning) and the orientation of the autonomous mobile object 10 (looking in the front, looking left, and looking right).

Moreover, as illustrated on the right side in FIG. 24, the user can touch an arbitrary point on the environmental map, and can move the autonomous mobile object 10 to that point. Moreover, for example, the user can press a "salute" button, a "point" button, or a "siren" button; and make the autonomous mobile object 10 perform the corresponding action.

Furthermore, in the user interface used for controlling the patrol in the third mode, information such as the state of the battery and the state of heating in the autonomous mobile object 10 and the activity limit estimated from such information can be displayed.

Then, while checking the variety of displayed information; the user can control the movement, the orientation, and the behavior of the autonomous mobile object 10, so as to execute the patrol in an arbitrary manner.

Meanwhile, at that time, the operation control unit 140 according to the embodiment moves the autonomous mobile object 10 based on the input by the user, and performs control to ensure that the image information and the voice information obtained by the input unit 110 during the movement is streamed to the user.

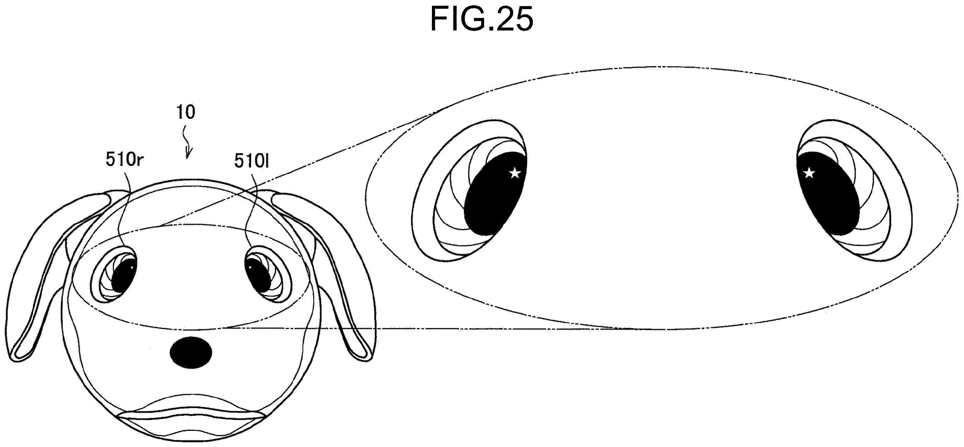

Moreover, at that time, the operation control unit 140 according to the embodiment expresses, using the display on the display 510 or using an action, the fact that a patrol in the third mode is underway. FIG. 25 is a diagram illustrating an exemplary display performed during a patrol in the third mode according to the embodiment. In the example illustrated in FIG. 25, the operation control unit 140 controls the display in such a way that star-shaped symbols keep on circling inside the pupils. Moreover, the operation control unit 140 displays a design, which evokes the aperture of the camera, on the edge of the irises.

As explained above, in the third mode according to the embodiment, the image information and the voice information is streamed to the user at the report destination. Hence, as explained above, a different display is performed in the display 510 as compared to the first mode or the second mode, and thus the patrolling in the third mode is more explicitly exhibited to the target person. Thus, even if patrolling is performed contrary to the intention of the target person, he or she can deal with it in an early stage.

Furthermore, in addition to controlling the display 510, the operation control unit 140 can move the autonomous mobile object 10 at the speed meant for an emergency (for example, same speed as sprinting), and can perform control to ensure that the autonomous mobile object 10 does not behave in any other manner other than the instructions from the user in control.

Till now, the explanation was given about the patrolling performed in the third mode according to the embodiment. In this way, the autonomous mobile object 10 according to the embodiment performs operations based on a plurality of modes corresponding to the needs of the target person or the needs of the report destination, so that the watching task can be implemented in a more secure and flexible manner while respecting the privacy of the target person.

Meanwhile, the explanation above was given mainly about the case in which the target person for watching according to the embodiment is an elderly person living at a distant place. However, the target person according to the embodiment is not limited to that example. Alternatively, for example, the target person for watching according to the embodiment can be a child living together with the user (a parent) representing the report destination.

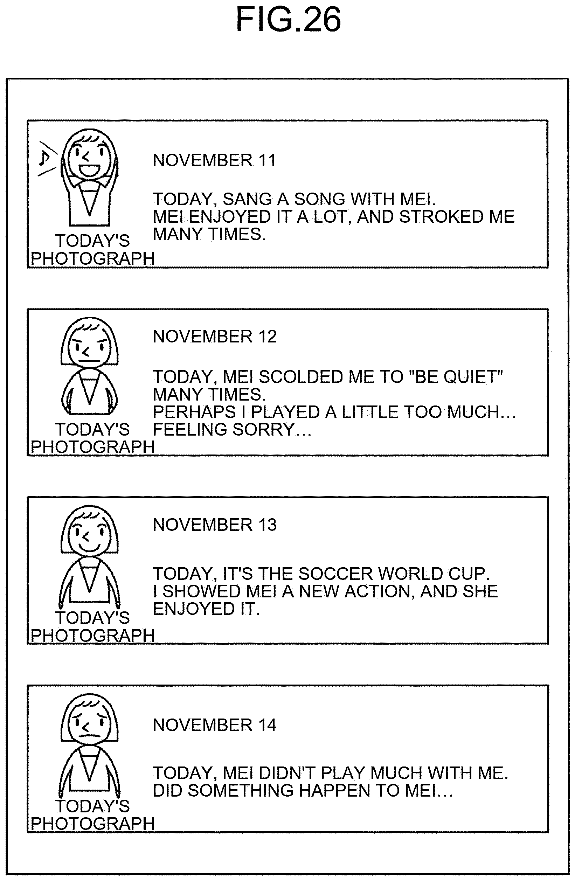

In that case, the operation control unit 140 can perform control in such a way that the behavior and the condition of the target person during the absence of the user representing the report destination is reported in the form of a diary. In FIG. 26 is illustrated an exemplary report in the case in which the target person according to the embodiment is a child.

For example, in the example illustrated in FIG. 26, based on the result of interaction with the child representing the target person, the operation control unit 140 performs control to ensure that the behavior and the condition of that child is reported as a diary from the perspective of the autonomous mobile object 10.

In this way, the operation control unit 140 according to the embodiment can perform control to ensure that the information is provided in various formats according to the target person for watching or according to the objective of the watching task. For example, because of the report explained above, the parent user representing the report destination can get to know and enjoy the behavior and the condition of the child that was noted as a diary by the autonomous mobile object 10 while the parent user was away.

Till now, the explanation was given about an example of the variation of the target person and the information provision according to the embodiment. Meanwhile, the target person for watching according to the embodiment can be, for example, a nonhuman living object such as a pet. In that case too, the autonomous mobile object 10 can control the provision of information based on the interaction with the living object and the result of various types of recognition.

### <2. Exemplary hardware configuration>

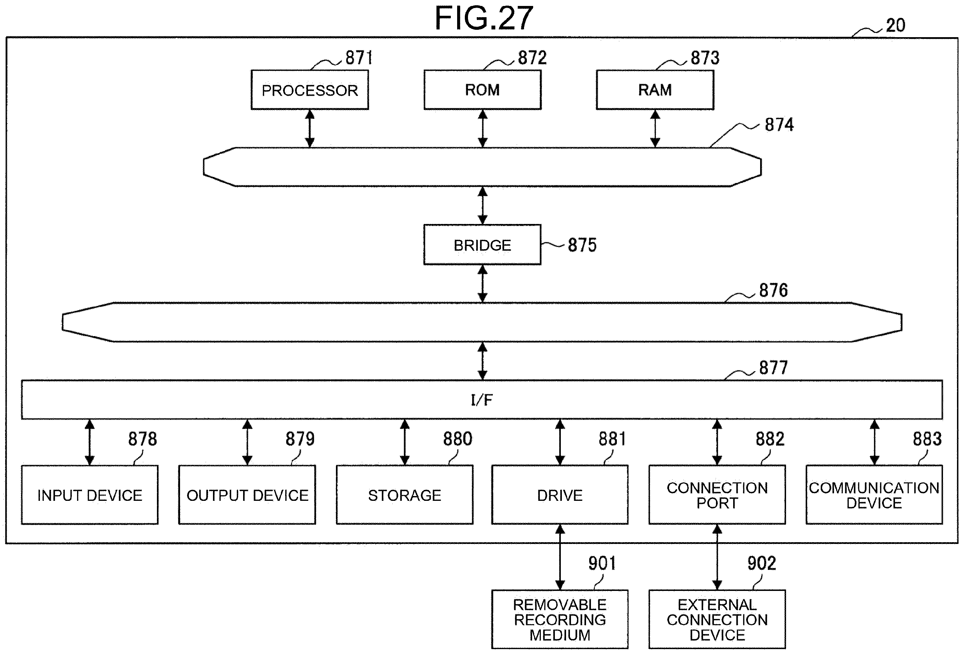

Given below is the explanation of an exemplary hardware configuration of the information processing server 20 according to the embodiment of the application concerned. FIG. 27 is a block diagram of an exemplary hardware configuration example of the information processing server 20 according to the embodiment of the application concerned. With reference to FIG. 27, the information processing server 20 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Meanwhile, this hardware configuration is only exemplary, and some of the constituent elements can be omitted. On the other hand, apart from the constituent elements mentioned above, some other constituent elements can be included too.

### (Processor 871)

The processor 871 functions as, for example, an arithmetic processing device or a control device; and controls the operations, entirely or partially, of the constituent elements based on various programs recorded in the ROM 872, the RAM 873, the storage 880, or a removable recording medium 901.

### (ROM 872 and RAM 873)

The ROM 872 is used to store programs to be read by the processor 871, and to store the data to be used in arithmetic processing. In the RAM 873, for example, programs to be read by the processor 871 are stored, either temporarily or permanently, along with various parameters that undergo changes during the execution of the programs.

### (Host bus 874, bridge 875, external bus 876, and interface 877)

The processor 871, the ROM 872, and the RAM 873 are connected to each other by, for example, the host bus 874 that is capable of highspeed data transmission. Moreover, for example, the host bus 874 is connected to the external bus 876, which has a relatively low data transmission speed, via the bridge 875. Furthermore, the external bus 876 is connected to various constituent elements via the interface 877.

### (Input device 878)

In the input device 878, for example, a mouse, a keyboard, a touch-sensitive panel, buttons, switches, and levers are used. Alternatively, as the input device 878, it is also possible to use a remote controller capable of transmitting control signals using infrared light or some other type of radio waves. Moreover, in the input device 878, a sound input device such as a microphone can be included.

### (Output device 879)

The output device 879 is a device, such as a display device such as a CRT (Cathode Ray Tube), an LCD, or an organic EL; or an audio output device such as a speaker or headphones; or a printer; or a cellular phone; or a facsimile machine, that is capable of notifying the user, visually or aurally, about the obtained information. Moreover, the output device 879 according to the application concerned includes one of various vibration devices capable of outputting tactile stimulation.

### (Storage 880)

The storage 880 is a device for storing a variety of data. As the storage 880, for example, a magnetic memory device such as a hard disk drive (HDD) is used; or a semiconductor memory device is used; an optical memory device is used; or a magneto-optical memory device is used.

### (Drive 881)

The drive 881 is a device, such as a magnetic disk, an optical disk, a magneto-optical disk, or a semiconductor memory, that is used for reading information recorded in the removable recording medium 901 or for writing information in the removable recording medium 901.

### (Removable recording medium 901)

The removable recording medium 901 is, for example, a DVD media, a Blu-ray (registered trademark) media, an HD DVD media, or one of various semiconductor memory media. Of course, the removable recording medium 901 can be, for example, an IC card having a contactless IC chip installed therein; or an electronic device.

### (Connection port 882)

The connection port 882 is a port, such as a USB (Universal Serial Bus) port, an IEEE1394 port, an SCSI (Small Computer System Interface), an RS-232C port, or an audio terminal, that is meant for establishing connection with an external connection device 902.

### (External connection device 902)

The external connection device 902 is, for example, a printer, a portable music player, a digital camera, a digital video camera, or an IC recorder.

### (Communication device 883)

The communication device 883 is a communication device for establishing connection with a network and is, for example, a communication card for a wired or a wireless LAN, Bluetooth (registered trademark), or WUSB (Wireless USB); or is a router for optical communication; or is a router for ADSL (Asymmetric Digital Subscriber Line); or one of various communication modems.

### <3. Summary>

As explained above, the autonomous mobile object 10 according to the embodiment of the application concerned includes the operation control unit 140 that controls the operations of the autonomous mobile object 10. The operation control unit 140 according to the embodiment is characterized by the function of performing control to provide information regarding the everyday life of the target person based on the normal condition of the target person as estimated from the result of learning the everyday behavior and the everyday condition of the target person and based on the recognized behavior and the recognized condition of the target person. As a result of such a configuration, it becomes possible to perform the watching task in more comfortable manner that is integrated into the everyday life of the target person.

Although the application concerned is described above in detail in the form of a preferred embodiment with reference to the accompanying drawings; the technical scope of the application concerned is not limited to the embodiment described above. That is, the application concerned is to be construed as embodying all modifications such as other embodiments, additions, alternative constructions, and deletions that may occur to one skilled in the art that fairly fall within the basic teaching herein set forth.

Moreover, the effects described in the present written description are only explanatory and exemplary, and are not limited in scope. That is, in addition to or in place of the effects described above, the technology disclosed in the application concerned enables achieving other effects that may occur to one skilled in the art.

Meanwhile, it is also possible to create a program for making the hardware of a computer including a CPU, a ROM, and a RAM implement functions equivalent to the configuration of the information processing server 20; and it is possible to provide a computer-readable recording medium in which that program is recorded.

Meanwhile, a configuration as explained below also falls within the technical scope of the application concerned.
(1) An information processing device comprising a control unit that controls operations of an autonomous mobile object, wherein
   based on normal condition of a target person as estimated from a learning result regarding everyday behavior and everyday condition of the target person, and
   based on recognized behavior and recognized condition of the target person,
   the control unit controls provision of information regarding everyday life of the target person.
(2) The information processing device according to (1), wherein the control unit controls provision of information regarding recognition or nonrecognition of behavior and condition of the target person as included in scope of the normal condition.
(3) The information processing device according to (2), wherein behavior and condition of the target person as included in scope of the normal condition includes at least either whereabouts of the target person in predetermined situation, or utterance of the target person in predetermined situation, or touching the autonomous mobile object by the target person in predetermined situation.
(4) The information processing device according to (2), wherein behavior and condition of the target person as included in scope of the normal condition includes interaction with the autonomous mobile object.
(5) The information processing device according to (4), wherein the control unit controls provision of information regarding change in the normal condition.
(6) The information processing device according to any one of (1) to (5), wherein, when behavior and condition of the target person not included in scope of the normal condition is recognized, the control unit performs control to provide information regarding deviation from the normal condition.
(7) The information processing device according to any one of (1) to (6), wherein, based on route setting, the control unit
   controls execution of a patrol by the autonomous mobile object, and
   controls provision of information regarding behavior and condition of the target person during the patrol.
(8) The information processing device according to (7), wherein the control unit controls execution of the patrol based on an environmental map that is generated accompanying autonomous movement of the autonomous mobile object.
(9) The information processing device according to (8), wherein, based on route setting specified by user and based on the environmental map, the control unit controls execution of the patrol by the autonomous mobile object.
(10) The information processing device according to (8), wherein the control unit automatically decides on route setting of the patrol based on the normal condition.
(11) The information processing device according to any one of (1) to (6), wherein the control unit
   controls execution of a patrol by the autonomous mobile object based on a request from user who has been allowed in advance by the target person, and
   controls operations of the autonomous mobile object during the patrol based on input from the user.
(12) The information processing device according to (11), wherein the control unit
   moves the autonomous mobile object during the patrol based on input from the user, and
   controls provision of image information, which is obtained during movement, to the user.
(13) The information processing device according to any one of (7) to (12), wherein the control unit varies movement form of the autonomous mobile object during execution and nonexecution of the patrol.
(14) The information processing device according to any one of (1) to (13), further comprising a map generating unit that generates an environmental map based on sensor information collected by the autonomous mobile object.
(15) The information processing device according to any one of (1) to (14), further comprising a learning unit that learns everyday behavior and everyday condition of the target person based on sensor information collected by the autonomous mobile object.
(16) The information processing device according to any one of (1) to (15), further comprising a recognizing unit that recognizes behavior and condition of the target person based on sensor information collected by the autonomous mobile object.
(17) The information processing device according to any one of (1) to (16), further comprising an interface control unit that controls a user interface used in providing information regarding everyday life of the target person.
(18) The information processing device according to any one of (1) to (17), wherein
   the normal condition includes identification status of a visitor who visits living space of the target person, and
   when the identification status of the visitor not included in scope of the normal condition is obtained, the control unit performs control to ensure that information regarding the visitor is provided.
(19) An information processing method comprising controlling, by a processor, operations of an autonomous mobile object, wherein
   the controlling further includes
   based on normal condition of a target person as estimated from everyday behavior and everyday condition of the target person, and
   based on recognized behavior and recognized condition of the target person,
   controlling provision of information regarding everyday life of the target person.
(20) A program that makes a computer function as an information processing device including
   a control unit that controls operations of an autonomous mobile object, wherein
   based on normal condition of a target person as estimated from everyday behavior and everyday condition of the target person, and
   based on recognized behavior and recognized condition of the target person,
   the control unit controls provision of information regarding everyday life of the target person.

### Reference Signs List

- 10: autonomous mobile object

- 110: input unit
- 120: recognizing unit
- 130: learning unit
- 140: operation control unit
- 20: information processing server
- 210: interface control unit

## Claims

1. An information processing device comprising a control unit that controls operations of an autonomous mobile object, wherein
based on normal condition of a target person as estimated from a learning result regarding everyday behavior and everyday condition of the target person, and
based on recognized behavior and recognized condition of the target person,
the control unit controls provision of information regarding everyday life of the target person.

2. The information processing device according to claim 1, wherein the control unit controls provision of information regarding recognition or nonrecognition of behavior and condition of the target person as included in scope of the normal condition.

3. The information processing device according to claim 2, wherein behavior and condition of the target person as included in scope of the normal condition includes at least either whereabouts of the target person in predetermined situation, or utterance of the target person in predetermined situation, or touching the autonomous mobile object by the target person in predetermined situation.

4. The information processing device according to claim 2, wherein behavior and condition of the target person as included in scope of the normal condition includes interaction with the autonomous mobile object.

5. The information processing device according to claim 4, wherein the control unit controls provision of information regarding change in the normal condition.

6. The information processing device according to claim 1, wherein, when behavior and condition of the target person not included in scope of the normal condition is recognized, the control unit performs control to provide information regarding deviation from the normal condition.

7. The information processing device according to claim 1, wherein, based on route setting, the control unit
controls execution of a patrol by the autonomous mobile object, and
controls provision of information regarding behavior and condition of the target person during the patrol.

8. The information processing device according to claim 7, wherein the control unit controls execution of the patrol based on an environmental map that is generated accompanying autonomous movement of the autonomous mobile object.

9. The information processing device according to claim 8, wherein, based on route setting specified by user and based on the environmental map, the control unit controls execution of the patrol by the autonomous mobile object.

10. The information processing device according to claim 8, wherein the control unit automatically decides on route setting of the patrol based on the normal condition.

11. The information processing device according to claim 1, wherein the control unit
controls execution of a patrol by the autonomous mobile object based on a request from user who has been allowed in advance by the target person, and
controls operations of the autonomous mobile object during the patrol based on input from the user.

12. The information processing device according to claim 11, wherein the control unit
moves the autonomous mobile object during the patrol based on input from the user, and
controls provision of image information, which is obtained during movement, to the user.

13. The information processing device according to claim 7, wherein the control unit varies movement form of the autonomous mobile object during execution and nonexecution of the patrol.

14. The information processing device according to claim 1, further comprising a map generating unit that generates an environmental map based on sensor information collected by the autonomous mobile object.

15. The information processing device according to claim 1, further comprising a learning unit that learns everyday behavior and everyday condition of the target person based on sensor information collected by the autonomous mobile object.

16. The information processing device according to claim 1, further comprising a recognizing unit that recognizes behavior and condition of the target person based on sensor information collected by the autonomous mobile object.

17. The information processing device according to claim 1, further comprising an interface control unit that controls a user interface used in providing information regarding everyday life of the target person.

18. The information processing device according to claim 1, wherein
the normal condition includes identification status of a visitor who visits living space of the target person, and
when the identification status of the visitor not included in scope of the normal condition is obtained, the control unit performs control to ensure that information regarding the visitor is provided.

19. An information processing method comprising controlling, by a processor, operations of an autonomous mobile object, wherein
the controlling further includes
based on normal condition of a target person as estimated from everyday behavior and everyday condition of the target person, and
based on recognized behavior and recognized condition of the target person,
controlling provision of information regarding everyday life of the target person.

20. A program that makes a computer function as an information processing device including
a control unit that controls operations of an autonomous mobile object, wherein
based on normal condition of a target person as estimated from everyday behavior and everyday condition of the target person, and
based on recognized behavior and recognized condition of the target person,
the control unit controls provision of information regarding everyday life of the target person.
